# EUROPÄISCHE PATENTSCHRIFT

(11) **EP 2 786 258 B1**
(45) Veröffentlichungstag und Bekanntmachung des Hinweises auf die Patenterteilung: **20.02.2019**
(21) Anmeldenummer: 12774930.7
(22) Anmeldetag: 28.09.2012
(51) Int. Cl.: G06F 13/28

(54) **SYSTEM, COMPUTER-IMPLEMENTIERTES VERFAHREN UND COMPUTERPROGRAMMPRODUKT ZUR DIREKTEN KOMMUNIKATION ZWISCHEN HARDWAREBESCHLEUNIGERN IN EINEM COMPUTERCLUSTER**
SYSTEM, COMPUTER-IMPLEMENTED METHOD AND COMPUTER PROGRAM PRODUCT FOR DIRECT COMMUNICATION BETWEEN HARDWARE ACCELERATORS IN A COMPUTER CLUSTER
SYSTÈME, PROCÉDÉ INFORMATISÉ ET PRODUIT LOGICIEL INFORMATIQUE POUR LA COMMUNICATION DIRECTE ENTRE DES ACCÉLÉRATEURS MATÉRIELS AU SEIN D'UN GROUPE D'ORDINATEURS

(30) Priorität: 29.11.2011 DE 102011119693
(43) Veröffentlichungstag der Anmeldung: 08.10.2014
(73) Patentinhaber: EXTOLL GmbH, 68159 Mannheim (DE)
(72) Erfinder: FRÖNING, Holger, 68199 Mannheim (DE)
(74) Vertreter: Müller-Boré & Partner Patentanwälte PartG mbB
(86) Internationale Anmeldenummer: PCT/EP2012/004077
(87) Internationale Veröffentlichungsnummer: WO 2013/079130

(56) Entgegenhaltungen:
- FR-A1- 2 953 307
- JEFFREY S VETTER ET AL: "Keeneland: Bringing Heterogeneous GPU Computing to the Computational Science Community", COMPUTING IN SCIENCE AND ENGINEERING, IEEE SERVICE CENTER, LOS ALAMITOS, CA, US, Bd. 13, Nr. 5, 1. September 2011 (2011-09-01), Seiten 90-95, XP011351915, ISSN: 1521-9615, DOI: 10.1109/MCSE.2011.83
- HOLGER FRONING ET AL: "Efficient hardware support for the Partitioned Global Address Space", PARALLEL&DISTRIBUTED PROCESSING, WORKSHOPS AND PHD FORUM (IPDPSW), 2010 IEEE INTERNATIONAL SYMPOSIUM ON, IEEE, PISCATAWAY, NJ, USA, 19. April 2010 (2010-04-19), Seiten 1-6, XP031680222, ISBN: 978-1-4244-6533-0
- STUART J A ET AL: "Message passing on data-parallel architectures", PARALLEL&DISTRIBUTED PROCESSING, 2009. IPDPS 2009. IEEE INTERNATIONAL SYMPOSIUM ON, IEEE, PISCATAWAY, NJ, USA, 23 May 2009 (2009-05-23), pages 1-12, XP031487510, ISBN: 978-1-4244-3751-1

## Beschreibung

Die vorliegende Erfindung bezieht sich generell auf Computercluster. Spezifischer bezieht sich die vorliegende Erfindung auf ein System, ein computer-implementiertes Verfahren und ein Computerprogrammprodukt zur direkten Kommunikation zwischen Hardwarebeschleunigern in einem Computercluster.

In Computern und/oder Computerclustern werden Hardwarebeschleuniger bzw. Beschleuniger zur effizienteren Bearbeitung spezieller peripherer Geräte, z.B. Grafikkarte, Soundkarte, etc. eingesetzt. Eine Nutzbarkeit solcher Beschleuniger in einem Computercluster kann aber durch eine fehlende direkte Kommunikation und/oder Synchronisation zwischen Beschleuniger entfernter Computer in dem Computercluster eingeschränkt und damit ineffizient (bezüglich Zeit und/oder Speicherplatzbedarf) sein. Dementsprechend kann durch einen dadurch entstehenden Kommunikationsoverhead eine erreichbare Leistungssteigerung des Computerclusters begrenzt sein. Folglich kann auch eine Parallelisierung zum Zweck der Leistungssteigerung, Speichererweiterung und/oder Fehlertoleranz in dem Computercluster nicht oder nur begrenzt möglich sein.

Mit anderen Worten, in herkömmlichen Systemen kann eine Verwendbarkeit von Beschleunigern in parallelen Computer- Umgebungen wie beispielsweise Computerclustern wegen fehlender Unterstützung für direkte Kommunikation und/oder Synchronisieren eingeschränkt sein.

Bekannte Verwendungen von Beschleunigern zur Datenübertragungen zwischen räumlich verteilten Beschleuniger werden von den CPUs der jeweiligen Computer in einem Computercluster gehandhabt, welche Kommunikationspfade zwischen den verschiedenen Computern in dem Computercluster einrichten und die Netzwerkgeräte instruieren, die Daten zu übertragen. Beispielsweise werden dabei zuerst die Daten vom Spezialspeicher eines Beschleuniger in den Hauptspeicher (auch als Arbeitsspeicher bezeichnet) des entsprechenden Computers kopiert, um die Daten dann über das Netzwerk des Computerclusters in einen entfernten Hauptspeicher eines anderen Computers des Computerclusters zu übertragen. Anschließend werden die Daten in den Spezialspeicher des Ziel-Beschleunigers kopiert. Eine solche Kommunikation zwischen Beschleunigern verschiedener Computer in einem Computercluster wird als indirekte Kommunikation zwischen Beschleunigern in einem Computercluster bezeichnet, weil die Kommunikation über die jeweiligen Arbeitsspeicher der jeweiligen Computer des Computerclusters, die bei der Datenkommunikation beteiligt sind, abläuft.

Alternative Ansätze erlauben es den Computern in einem Computercluster zwar, direkt lesend und/oder schreibend auf den Spezialspeicher von Beschleunigern zuzugreifen, um unnötige temporäre Kopiervorgänge in den Hauptspeicher der jeweiligen Computer zu vermeiden. Allerdings wird auch bei diesen Ansätzen eine Datenkommunikation zwischen Beschleunigern durch Threads und/oder Prozesse auf den jeweiligen CPUs ausgeführt. Eine solche Kommunikation zwischen entfernten Beschleunigern von verschiedenen Computern in einem Computercluster führt allerdings zu einem erheblichen Overhead, was insbesondere die Effektivität von Übertragung kleinerer Datenmengen , beispielsweise zwischen 4Byte und 128kByte, limitieren kann. In vielen Anwendungen, welche in einem Computercluster implementiert sein können, werden kleine Datenmengen beispielsweise für Beschleuniger-Kommunikation und/oder für Synchronisation übertragen. Weiterhin wird die CPU der jeweiligen beteiligten Computer benötigt, die Aufgaben der Kommunikation und Synchronisation aktiv zu steuern und kann somit nicht oder nur eingeschränkt für andere (Rechen-) Aufgaben verwendet werden. Demzufolge basieren auch diese Ansätze auf einer indirekten Kommunikation zwischen Hardwarebeschleunigern in einem Computercluster.

Um weiterhin eine Effizienz in Computerclustern zu verbessern, wurden bisher übergeordnete Softwareinstanzen eingesetzt, welche auf der jeweiligen CPU der Computer in dem Computercluster ausgeführt werden. Eine Kommunikation und/oder Synchronisation zwischen den Beschleunigern der jeweiligen Computer kann dann durch einen oder mehrere Kopiervorgänge angefragter Daten implementiert werden. Eine Kommunikation und/oder Synchronisation zwischen den Beschleunigern der jeweiligen Computer bleibt damit jedoch nur indirekt. Insbesondere sind sowohl eine Einbindung von CPUs der entfernten Computer als auch Kopiervorgänge von angefragten Daten bei einer Kommunikation und/oder Synchronisation zwischen entfernten Beschleunigern mit hohen Zusatzkosten (bezüglich Zeit, Speicherbedarf und/oder Rechenleistung) verbunden, so dass eine Leistungsfähigkeit und/oder eine Skalierbarkeit eines Computerclusters eingeschränkt ist.

Dokument "Keeneland: Bringing Heterogeneous GPU Computing to the Computational Science Community" von Jeffrey S. Vetter et al. beschreibt einen Computercluster mit 120 Knoten, wobei jeder Knoten einen GPU umfassen kann. Die Computer können über ein Netzwerk des Computerclusters miteinander kommunizieren

Dokument "Efficient Hardware Support for the Partitioned Global Address Space" von Holger Fröning et al. beschreibt ein inkohärentes, verteiltes und gemeinsames Speichersystem. Der gemeinsame Speicher besteht aus einem Satz Knoten. Ein entfernter Speicherzugriff wird durch ein Weiterleiten lokaler Auslastungen oder ein Speichern von Transaktionen auf entfernten Knoten ermöglicht.

Dokument FR 2 953 307 betrifft einen Computer mit mehreren Grafikkarten. Innerhalb des Computers können GPUs mittels DMA, also über einen Speicherdirektzugriff, miteinander kommunizieren.

Aufgabe der vorliegenden Erfindung ist es dementsprechend, ein System, ein computer-implementiertes Verfahren und ein Computerprogrammprodukt vorzusehen, welche eine verbesserte Leistungsfähigkeit und/oder Skalierbarkeit von Computerclustern ermöglichen.

Diese Aufgabe wird durch die Gegenstände der unabhängigen Ansprüche gelöst. Bevorzugte Ausführungsformen sind Gegenstand der abhängigen Ansprüche.

Gemäß einer Ausführungsform ist ein System zur direkten Kommunikation zwischen Hardwarebeschleunigern in einem Computercluster vorgesehen, welches
einen ersten Hardwarebeschleuniger in einem ersten Computers eines Computercluster; und
einen zweiter Hardwarebeschleuniger in einem zweiten Computers des Computercluster
   umfasst,
wobei der erste und der zweite Computer verschieden voneinander sind und ausgebildet sind, entfernt über ein Netzwerk kommunizieren zu können, und
wobei der erste Hardwarebeschleuniger ausgebildet ist, Daten von dem zweiten Hardwarebeschleuniger anzufragen und Daten mittels eines Speicherdirektzugriffs auf einem globalen Adressraum von dem zweiten Computer abzurufen und/oder zu dem zweiten Computer zu übermitteln, so dass der erste und zweite Hardwarebeschleuniger direkt miteinander kommunizieren, wobei für die direkte Kommunikation zwischen den Hardwarebeschleunigern direkt über das Netzwerk und entsprechende Netzwerkschnittstellen auf den Computern in dem Cluster und ohne Unterstützung von CPUs und/oder Arbeitsspeicher des ersten und zweiten Computers erfolgt.

Bevorzugt kann der erste Beschleuniger ausgebildet sein, Daten von dem zweiten Beschleuniger anzufragen und die angefragten Daten mittels eines Speicherdirektzugriffs auf einem globalen Adressraum auf dem zweiten Computer abzurufen.

Eine direkte Kommunikation zwischen Beschleunigern liegt vor, wenn alle für den Kommunikationsvorgang notwendigen Aufgaben von Beschleuniger sowie Netzwerkgerät durchgeführt werden. Insbesondere sind CPU sowie Hauptspeicher nicht an einer solchen direkten Kommunikation beteiligt.

Der erste Beschleuniger (auch als Quell-Beschleuniger bezeichnet) kann somit mittels Speicherdirektzugriff auf dem globalen Adressraum des Netzwerks über eine Lese- und/oder Schreiboperation mit dem zweiten Beschleuniger (auch als Ziel-Beschleuniger bezeichnet) direkt kommunizieren.

Mit anderen Worten erfolgt die Datenanfrage mittels zumindest einer entfernten Lese- und/oder Schreiboperation, welche von einem Quell-Beschleuniger an einen Ziel-Beschleuniger über das Netzwerk des Computerclusters gesendet wird. Die Kommunikation ist direkt, weil lediglich die Netzwerkschnittstellen der jeweiligen Computer und der globale Adressraum des Netzwerks verwendet (und bevorzugt modifiziert) werden. Diese Kommunikation erfolgt mittels eines Speicherdirektzugriffs auf den globalen Adressraum des Netzwerks. Dieser globale Adressraum ist für die Beschleuniger transparent. Beschleunigern, die konzeptionell nicht zwischen globalen, lokalen, verschiedenen, und/oder entfernten Speichern unterscheiden können, wird damit eine Kommunikation und/oder ein Datenaustausch über beliebige, entfernte Speicher hinweg ermöglicht, ohne die Beschleuniger selbst anpassen zu müssen, weil ein globaler Adressraum im Netzwerk für Beschleuniger transparent zugreifbar wird.

Die Systemarchitektur eines Computerclusters umfasst zwei oder mehrere Computer mit ein oder mehreren Beschleunigern (auch als Accelerator, ACC bezeichnet) mit jeweiligen Spezialspeichern, Hauptprozessor (auch als Hauptrecheneinheiten oder CPUs bezeichnet) mit jeweiligen Hauptspeichern und ein Netzwerk. Das Netzwerk kann ein oder mehrere Netzwerkgeräte, welche entsprechende Netzwerkschnittstellen zur Verfügung stellen, umfassen. Die Netzwerkschnittstellen können für eine direkte Kommunikation zwischen den Beschleunigern angepasst werden. Weiterhin ist der Einsatz von Switches im Netzwerk ohne Einschränkung möglich, so dass eine Skalierbarkeit gegeben ist.

Eine indirekte Kommunikation zwischen den (Hardware-)Beschleunigern liegt vor, wenn für den Vorgang der Kommunikation zwischen den Beschleunigern mehr Rechen- und/oder Speichereinheiten als unabdinglich notwendig einbezogen werden, insbesondere wenn mehrere Kopiervorgänge durchgeführt werden. Eine direkte Kommunikation zwischen Hardwarebeschleunigern liegt dann vor, wenn nur die unmittelbar für die Kommunikation notwendigen Rechen- und/oder Speichereinheiten beteiligt sind, und insbesondere dann wenn die Kommunikation nur einen einzelnen Kopiervorgang von Daten an Speicheradressen beinhaltet.

Ein globaler Adressraum liegt dann vor, wenn in einem Computercluster aus mehreren Ressourcen alle lokalen Adressräume zu einem einheitlichen, flachen (d.h. ohne Hierarchie) Adressraum zusammengefasst werden. Durch Nutzung einer globalen Adresse kann somit sowohl auf lokale und als auch entfernte Adressen zugegriffen werden. Der globale Adressraum kann in jeweilige Spezialspeicher der Hardwarebeschleuniger definiert sein.

Durch direkte Kommunikation von Hardwarebeschleunigern in einem Computercluster auf einem globalen Adressraum, also beispielsweise mit einem verteilten gemeinsamen Speicher für die Hardwarebeschleuniger ist eine Leistungssteigerung von Beschleunigern in einem Computercluster zu erzielen, eine Menge an Spezialspeicher für Beschleuniger zu erhöhen und/oder eine Fehlertoleranz zu erhöhen. Somit kann eine verbesserte Leistungsfähigkeit und/oder Skalierbarkeit von Computerclustern ermöglicht werden.

Beispielsweise nutzt eine CPU den Arbeitsspeicher als primäre Ressource für Daten, unabhängig davon, ob dieser Arbeitsspeicher lokal oder als Teil eines verteilten gemeinsamen Speichers entfernt ist. Ein Vorteil eines Hardwarebeschleunigers (beispielsweise eine GPU) basiert auf der Ersetzung dieses Arbeitsspeichers durch Spezialspeicher (beispielsweise GDDR einer GPU), welcher höhere Bandbreiten aufweist, aber im Vergleich zu dem Arbeitsspeicher in einer Kapazität eingeschränkter ist. Hardwarebeschleuniger können auch auf den Arbeitsspeicher eines Computers und/oder eines Computerclusters zugreifen, um Daten von und zum Spezialspeicher zu transportieren. Die Verarbeitungseinheiten des Hardwarebeschleunigers können aber nur auf dem Spezialspeicher arbeiten, nicht auf dem Arbeitsspeicher.

Prinzipiell erlaubt ein globaler Adressraum jedem Computer in einem Cluster, direkt auf entfernte Computer über diesen globalen Adressraum zuzugreifen. Dies gilt beispielsweise für CPUs. Für Hardwarebeschleuniger ist ein Zugriff über einen globalen Adressraum nicht ohne Weiteres möglich, denn:
(1) CPUs halten normalerweise auf verteilte Cachestrukturen kohärent, wobei zugrundeliegenden Prinzipien einer globalen Cachekohärenz die Skalierbarkeit solcher Systeme beschränken. Hardwarebeschleuniger garantieren i. d. R. keinerlei Cachekohärenz.
(2) Verarbeitungseinheiten von CPUs können direkt auf entfernten Speichern arbeiten, d.h. es erfolgen keine weiteren Kopien. Verarbeitungseinheiten von Hardwarebeschleunigern arbeiten i.d.R. nur auf Spezialspeichem, d.h. es ist mindestens eine Kopie notwendig.
(3) CPUs definieren die zentrale Ressource in einem Computersystem, wohingegen Hardwarebeschleuniger als Zusatzgeräte entworfen werden. Würde in einem Computer und/oder in einem Computercluster die CPU(s) wegrationalisiert werden, dann müsste beispielsweise die Netzwerkschnittstelle des Computerclustes diese Zusatzaufgaben der CPU(s) übernehmen. Solche Zusatzaufgaben können beispielsweise eine Initialisierung des Systems inklusive eines globalem Adressraums umfassen.

Folglich ist die Verwendung eines globalen Adressraums in einem Computercluster, welcher für CPUs entworfen wurde, nicht ohne Weiteres und nur mit einer erheblichen technischen Umstrukturierung und/oder Umgestaltung von Prozessabläufen des Computerclusters für Hardwarebeschleuniger möglich.

Anders als CPUs arbeiten Beschleuniger hochgradig Thread-parallel, und nur wenn alle Threads auf einem Beschleuniger (z.B. einer GPU bzw. eines Warps) einen einheitlichen Instruktionsfluss verfolgen, kann die maximale Leistung der Beschleuniger erreicht werden. Falls ein oder wenige Threads sich im Instruktionsfluss unterscheiden (Branch Divergence), dann sinkt die Leistung auf einen Bruchteil. Angenommen, Threads eines Beschleunigers wären in der Lage eine Netzwerkschnittstelle bzgl. einer Kommunikation zu instruieren, dann könnte dies nur ein bzw. eine geringe Anzahl Threads durchführen, in jedem Falle viel weniger als die übliche Anzahl Threads eines Beschleunigers. Dies führt dann aufgrund der sogenannten Branch Divergence zu einem erheblichen Leistungseinbruch.

Im Gegensatz dazu und anders als eine Kommunikation zwischen CPUs, werden globale Adressräume für Beschleuniger nutzbar gemacht. In diesem Fall können eine beliebige Anzahl von Threads gleichzeitig über eine Netzwerkschnittstelle auf entfernte Ressourcen zugreifen. Somit ist das Problem der Branch Divergence bei einer direkten Kommunikation zwischen Beschleunigern mittels globaler Addressräume nicht gegeben.

Mit anderen Worten, wird eine Kommunikation zwischen CPUs in einem Computercluster entsprechend für Beschleuniger verwendet, so wäre dies aufgrund der oben beschriebenen Branch Divergence sehr ineffizient. Diese Ineffizienz wird durch den Einsatz globaler Adressräume überwunden.

Mit anderen Worten wird eine Einrichtung direkter Kommunikationswege zwischen räumlich verteilten Beschleuniger in einem Computercluster ermöglicht. Direkte Kommunikation is dadurch definiert, dass ein Beschleuniger in einem Computer des Computerclusters autonom lesend und/oder schreibend auf den Spezialspeicher eines entfernten Beschleunigers in einem von dem Computer verschiedenen Computer des Computerclusters zugreifen kann. CPU-Threads und/oder CPU-Prozesse sind nicht in der Kommunikation der entfernten Beschleuniger des Computerclusters beteiligt. Vielmehr werden alle für eine solche direkte Kommunikation notwendigen Operationen durch die beteiligten entfernten Beschleuniger und/oder eine Netzwerkwerkschnittstelle von Netzwerkgeräten zwischen den entsprechenden Computern des Computerclusters durchgeführt. Dazu werden (virtuelle) globale Adressräume in dem Netzwerk des Computerclusters definiert, welche über die verteilten Spezialspeicher der jeweiligen Beschleuniger aufgespannt werden.

Vorteilhafterweise ermögliche eine solche direkte Kommunikation zwischen Beschleunigern in einem Computercluster eine effizientere Kommunikation zwischen den Beschleunigern.

Gemäß einer bevorzugten Ausführungsform erfolgt die direkte Kommunikation zwischen den Hardwarebeschleunigern direkt über das Netzwerk und entsprechende Netzwerkschnittstellen auf den Computern in dem Cluster.

Gemäß einer bevorzugten Ausführungsform ist für die direkte Kommunikation zwischen den Hardwarebeschleunigern keine Unterstützung von Rechen- und/oder Speichereinheiten notwendig.

Gemäß einer bevorzugten Ausführungsform umfassen die Rechen- und/oder Speichereinheiten CPUs und/oder Arbeitsspeicher des ersten und zweiten Computers.

Gemäß einer bevorzugten Ausführungsform ist der globale Adressraum transparent so dass die Beschleuniger keinen Unterschied zwischen einem lokalen Speicherzugriff (beispielsweise auf den ihm zugeordneten Spezialspeicher) und einem Zugriff auf einen entfernten Speicher (z.B. ein Spezialspeicher eines entfernten Beschleunigers) in einem anderen der Computer in dem Computercluster sehen.

Da Beschleuniger sich technisch und in ihrer Struktur prinzipiell von CPUs unterscheiden, erfolgt eine Kommunikation über nachrichtenorientierte Kommunikation und/oder über gemeinsamen Speicher zwischen Beschleunigern anders als zwischen CPUs in einem Computercluster. Insbesondere ist ein Aspekt der Transparenz ist bei CPUs nicht relevant. Beschleuniger sind hingegen hochspezialisierte Geräte, und nur durch einen Massenmarkt im Bereich von Computerspielen kostengünstig erhältlich. Für die Beschleunigung von Berechnungen alleine würde kein nennenswertes Volumen entstehen. Ein transparenter globaler Adressraum benötigt keine weitere Spezialisierung solcher Beschleuniger für eine verteilte Nutzung in einem Computercluster.

Da der globale Adressraum des Netzwerks des Computerclusters transparent ist, ist die direkte Kommunikation zwischen den beteiligten Beschleunigern transparent. Transparenz bedeutet hier, dass ein Beschleuniger in einem Computercluster nicht zwischen verschiedenen Adressen unterscheiden muss, so dass es ist für einen Beschleuniger nicht sichtbar ist, ob eine Adresse auf lokale oder entfernte Speicher (auch als Speichereinheiten bezeichnet) zeigt und/oder ob eine Adresse auf Arbeitsspeicher, Spezialspeicher und/oder andere Speicher von einem Computer und/oder dem Netzwerk des Computerclusters zeigt. Folglich können Beschleuniger wie beispielsweise Grafikprozessoren, welche nicht für eine verteilte Nutzung, wie beispielsweise in einem Computercluster, ausgelegt sind, mittels dieser Transparenz sowohl auf entfernten Speichern als auch auf verschiedenen Arten von Speichern (z.B. Spezialspeicher, Hauptspeicher, Arbeitspeicher, etc.) arbeiten. Mit anderen Worten, Beschleuniger, die nicht für verteilte Anwendungen in einem Computercluster vorgesehen und/oder ausgebildet sind, werden mittels der Verwendung globaler Adressräume für Computercluster nutzbar, ohne die Beschleuniger selbst ändern zu müssen. Außerdem, obwohl der Beschleuniger nicht zwischen lokalen und entfernten Zugriffen auf Speicheraddressen unterscheiden kann, ist es trotzdem möglich einem Anwender und/oder Programmierer die unterschiedlichen Zugriffskosten sichtbar zu machen und somit Lokalitätsoptimierungen durchzuführen. Somit kommen Standard-Beschleuniger zur Anwendung. Beispielsweise kann eine und/oder mehrere der folgenden Graphikkarten genutzt werden EVGA GeForce GT 620, NVidia Tesla K10, NVidia Tesla M2090, NVidia Tesla C2075, NVIDIA GeForce GTX 680, AMD FireStream 9370, AMD FirePro W9000, und/oder Matrox M9188 ohne diese selbst modifizieren zu müssen, in dem erfindungsgemäßen System zum Einsatz kommen. Es wird lediglich eine Modifikation der Netzwerkschnittstelle erforderlich, so dass ein Bereich bzw. Adressraum im Spezialspeicher des Beschleunigers für eine Kommunikation über das Netzwerk zur Anwendung kommen kann für einen Speicherdirektzugriff auf dem globalen Adressraum.

Beispielsweise sind entfernte Lese- und/oder Schreiboperationen eine transparente Erweiterung des lokalen Speicherzugriffsschemas der Beschleuniger sind. Es sollte für diese Operationen auch das lokale Konsistenzmodell der Beschleuniger beibehalten werden. Das Netzwerk erhält beispielsweise die Reihenfolge von Paketen, d.h. Pakete (welche Lese- oder Schreiboperationen) enthalten sollten nicht einander überholen. Bezüglich der Implementierung macht es aber keinen Unterschied ob die Reihenfolge im Netzwerk erhalten bleibt und/oder ob Pakete beim Empfang im Ziel (z.B. Ziel-Beschleuniger) umsortiert werden um die ursprüngliche Reihenfolge wieder herzustellen.

Weiterhin kann das Netzwerk garantieren, dass Pakete korrekt am Ziel ankommen. Paketverlust sollte vermieden werden und die Datenintegrität sichergestellt sein. Dafür können Implementierungen auf verschiedene Techniken zurückgreifen, z.B. CRC-basierte Link-level Retransmission-Protokolle, entsprechende End-to-End-Protokolle und/oder Forward-Error-Correction-Codes.

Eine Routingentscheidung kann dabei auf der Identifizierung des Ziels basieren. Abhängig ob die Zielnetzwerkschnittstelle mit dem Reihenfolgeverlust im Netzwerk umgehen kann (Umsortierung zur Wiederherstellung der ursprünglichen Reihenfolge), können Routingentscheidungen auch adaptive sein. Deterministische Routingentscheidungen können die Reihenfolgeerhaltung im Netzwerk garantieren und erfordern daher nicht eine solche Unterstützung. Der Routingmechanismus kann entweder auf Tabellen basieren, oder auf finiten Zustandsmaschinen welche die möglichen Ausgangsports des jeweiligen Switches berechnen. Aufgrund höherer Flexibilität sind tabellenbasierte Verfahren bevorzugt.

Gemäß einer bevorzugten Ausführungsform ist der globale Adressraum eine (bevorzugsweise gemeinsame) Partition in einem verteilten gemeinsamen Speicher des Computerclusters.

Im Wesentlichen definiert eine Partition einen Adressbereich, der einen speziellen Ressource (z.B. ein Teil des Spezialspeichers eines bestimmten Beschleunigers) zugeordnet ist. Eine Partition kann als gemeinsam definiert sein, wenn mehr als eine lokale und/order entfernte Ressource (z.B. CPU, Beschleuniger, Netzwerkgerät, etc.) darauf zugreifen kann. In diesem Sinne kann jeder globale Adressraum eine Partition sein. Allerdings ist diese Partition nicht zwingend gemeinsam. Beispielsweise kann über einen globalen Adressraum auf eine Ressource von einer entfernten Ressource zugegriffen werden, wobei ein lokaler Zugriff dieser Ressource dann nicht über den globalen Adressraum ausgeführt wird.

Gemäß einer bevorzugten Ausführungsform umfasst der Speicherdirektzugriff auf dem globalen Adressraum ein Übersetzen einer Quelladresse im Spezialspeicher des ersten Beschleunigers in eine globale Adresse auf dem globalen Adressraum (32), wobei mittels der globalen Adresse im globalen Adressraum der zweite Beschleuniger ermittelt wird.

Gemäß einer bevorzugten Ausführungsform wird der zweite Beschleuniger mittels einer Maske im globalen Adressraum ermittelt.

Gemäß einer bevorzugten Ausführungsform wird der zweite Beschleuniger mittels Intervalle im globalen Adressraum ermittelt.

Gemäß einer Ausführungsform ist ein Verfahren zur direkten Kommunikation zwischen Hardwarebeschleunigern in einem Computercluster vorgesehen, welches
Bereitstellen eines ersten Hardwarebeschleunigers in einem ersten Computers eines Computercluster; und
Bereitstellen eines zweiten Hardwarebeschleunigers in einem zweiten Computers des Computercluster
   umfasst,
wobei der erste und der zweite Computer verschieden voneinander sind und ausgebildet sind, entfernt über ein Netzwerk kommunizieren zu können, und
wobei der erste Beschleuniger ausgebildet ist, Daten von dem zweiten Beschleuniger anzufragen und/oder Daten mittels eines Speicherdirektzugriffs auf einem globalen Adressraum auf dem zweiten Computer abzurufen und/oder zu dem zweiten Computer zu übermitteln.

Gemäß einer Ausführungsform ist ein Computerprogrammprodukt vorgesehen, welches insbesondere auf einem computerlesbaren Medium gespeichert oder als Signal verwirklicht ist, welches, wenn geladen in den Speicher eines Computers und ausgeführt von einem Computer, bewirkt, dass der Computer ein erfindungsgemäßes Verfahren durchführt.

Bevorzugte Ausführungsformen werden im Folgenden mit Bezug auf begleitende Zeichnungen beispielhaft beschrieben. Es wird angemerkt, dass selbst wenn Ausführungsformen separat beschrieben sind, einzelne Merkmale davon zu zusätzlichen Ausführungsformen kombiniert werden können. Es zeigen:
Figur 1 ein Verfahren zur indirekten Kommunikation zwischen Hardwarebeschleunigern in einem Computercluster.
Figur 2 ein erfindungsgemäßes Verfahren zur direkten Kommunikation zwischen Hardwarebeschleunigern in einem Computercluster.
Figur 3 einen beispielhaften Speicherdirektzugriff auf einen globalen Adressraum für eine direkte Kommunikation zwischen Hardwarebeschleunigern in einem Computercluster.
Figur 4 eine beispielhafte Implementierung einer maskenbasierten Identifizierung eines Zielknoten bzw. Computers in einem Computercluster für einen Speicherdirektzugriff auf einen globalen Adressraum.
Figur 5 ein Computer-Netzwerk zur Implementierung eines Systems zur direkten Kommunikation zwischen Hardwarebeschleunigern in einem Computercluster.

In Folgenden werden einige technische Begriffe eingeführt, die in der Anmeldung im weiteren verwendet werden.

### (Hardware-)Beschleunigung/(Hardware-)Beschleuniger

Hardwarebeschleunigung kann im Allgemeinen eine Entlastung des Hauptprozessors (CPU) eines Computers durch Delegation spezieller rechenintensiver Aufgaben an auf diese Aufgaben spezialisierte Hardware, sogenannte (Hardware-)Beschleuniger beschreiben. Hardwarebeschleuniger bzw. Beschleuniger werden auch Acceleratoren genannt. Eine CPU ist so ausgelegt, dass sie beliebige Aufgaben in kurzer Zeit ausführen kann. Eine Bandbreite an ausführbaren Aufgaben der CPU kann nur durch eine Software beschränkt sein. Es kann allerdings wiederkehrende Aufgaben geben, die durch die allgemeine Auslegung der Prozessorarchitektur einer CPU nicht sehr effizient und schnell ausgeführt werden können. Die Möglichkeiten einer Optimierung beschränken sich bei der CPU auf die Software.

Um solche wiederkehrenden Aufgaben effizienter und schneller ausführen zu können, werden spezielle bzw. spezialisierte Hardwarebausteine bzw. Beschleuniger verwendet, die auf diese wiederkehrenden Aufgaben spezialisiert sind. Da Beschleuniger nicht so flexibel sein müssen wie eine CPU, können Optimierungen in der Ausführung in der Hardwarearchitektur solcher Beschleuniger berücksichtigt werden. Zudem kann die Rechenzeit der CPU dann für andere Aufgaben genutzt werden.

Beispiele für Beschleuniger, die in Computern und/oder in Computerclustern eingesetzt werden können sind Grafikkarten, Logikbausteine zur Dekodierung von mp3-Daten, En- und Dekodierung von Videodaten, Synthese von Audiosignalen mittels Audiobeschleunigern, und/oder digitale Signalprozessoren.

### (Computer-) Cluster

Ein Computercluster bzw. Cluster (auch Rechnerverbund genannt) bezeichnet im Allgemeinen eine Anzahl von vernetzten Computern, die von außen als ein einzelner Computer gesehen bzw. angesprochen werden können. Einzelne Elemente und/oder Computer eines Computerclusters können untereinander über ein schnelles Netzwerk verbunden sein. Ein Computercluster kann einzelne, möglicherweise autonome, Computer (welche auch Knoten genannt werden) umfassen, die über ein (Verbindungs-)Netzwerk miteinander in dem Cluster kommunizieren können, um beispielsweise im Verbund gemeinsam eine Aufgabe bzw. ein Problem zu bearbeiten und/oder zu lösen. Ein Computercluster kann in eine oder mehrere Teilmengen partitioniert werden, so dass jeweils nur eine Teilmenge der Computer in dem Cluster gemeinsam an einer Aufgabe/einem Problem arbeiten und zwar unabhängig und/oder losgelöst von den anderen Computern in dem Cluster.

### Verteilter gemeinsamer Speicher

Grundsätzlich kann ein verteilter gemeinsamer Speicher eine Verteilung des Arbeitsspeichers von Computerclustern bezeichnen, in welchen jeder Computer in dem Cluster in der Lage ist, direkt auf entfernten Speicher zuzugreifen. Im Allgemeinen kann sich ein verteilter gemeinsamer Speicher auf einen virtuellen gemeinsamen Speicher beziehen. Der eigentliche Speicher kann dabei auf ein oder mehrere verschiedene, voneinander getrennte und/oder unabhängige physikalische Speicher verteilt sein. Der verteilte gemeinsame Speicher kann folglich eine Vermittlungschicht zwischen Anwendersoftware und Hardware darstellen.

Eine Architektur mit verteiltem gemeinsamen Speicher beschreibt ein Computercluster, welches über einen physikalisch verteilten Speicher verfügt, der jedoch über einen einzelnen gemeinsamen logischen Adressraum angesprochen wird. Da der physikalische Adressraum als verteilt angesehen werden kann, ist somit der zugehörige Speicher auch verteilt. Beispielsweise kann ein Verbindungsnetzwerk benutzt werden, um eine Vielzahl verschiedener Rechen- und/oder Speichereinheiten (welche auch als Ressourcen bezeichnet werden können) in dem Cluster zu einem Gesamtsystem zu verbinden. Für eine Wegfindung von einer Einheit (z.B. eine CPU oder ein Ein-/Ausgabegerät) zu einer Speichereinheit durch das Cluster werden weitere Informationen benötigt. Der logische Adressraum unterscheidet sich vom physikalischen Adressraum in der Form, dass Teile einer logischen Adresse zur Identifizierung eines Ziels (z.B. die Speichereinheit) interpretiert werden. Die Identifizierung kann beispielsweise eine Interpretation dieses Adressteils beinhalten und/oder tabellengestützte Verfahren. In jedem Fall ist dies eine eindeutige Umsetzung, welches also jeder logischen Adresse eine eindeutige Speicher-Einheit zuordnet.

### Lokaler und globaler Adressraum

Der Adressraum eines Computers in einem Computercluster kann in lokale und globale Adressen und somit in lokale und globale Adressräume aufgeteilt werden. Während dann für globale Adressen keine physikalische Adresse in dem lokalen Speicher vorhanden sein kann, zeigen lokale Adressen auf lokale Speicherplätze in dem lokalen Speicher. Der lokale Speicher ist somit in eine lokale Partition und eine gemeinsame (also globale) Partition aufgeteilt, wobei die lokale Partition jedoch eine Größe von Null aufweisen kann. Die gemeinsame Partition definiert dann den global addressierbaren Adressraum in dem (lokalen) Speicher. Ist eine solche gemeinsame Partition in einem Computercluster verteilt, spricht man von einem verteilten gemeinsamen Speicher.

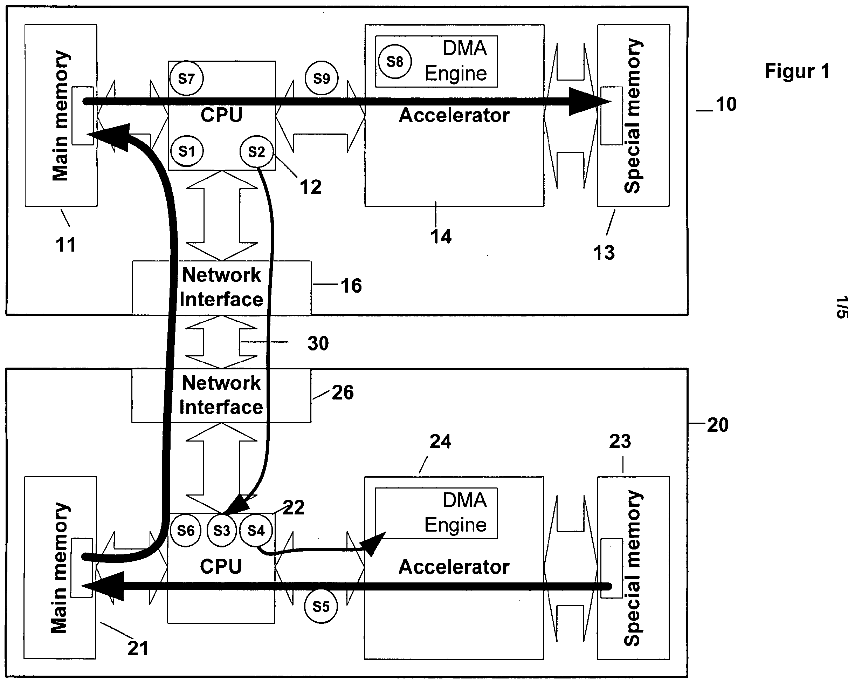

**Figur 1** zeigt eine herkömmliche indirekte Kommunikation zwischen Beschleunigern in einem Computercluster. Ein Computercluster kann eine Vielzahl von Computern (auch Knoten oder Server genannt) umfassen. In Figur 1 ist ein exemplarisches Computercluster mit zwei Computern 10, 20 gezeigt. Die Computer 10, 20 kommunizieren über ein Netzwerk 30 miteinander. Zur Kommunikation untereinander in dem Computercluster umfasst jeder der Computer eine Schnittstelle bzw. eine Netzwerkschnittstelle 16, 26. Die Netzwerkschnittstelle 16, 26 kann in einem entsprechenden Netzwerkgerät (nicht gezeigt), wie beispielsweise eine Netzwerkkarte, implementiert sein. Weiterhin umfasst jeder der Computer 10, 20 einen (Haupt-)Prozessor bzw. eine CPU 12, 22. Die CPU 12, 22 ist mit der Schnittstelle 16, 26 und einem Hauptspeicher bzw. Arbeitsspeicher 11, 21 verbunden. Ein Arbeitsspeicher bezieht sich auf einen Speicher, der die gerade auszuführenden Programme und/oder Porgrammteile und die dazu benötigten Daten umfasst. Der Arbeitsspeicher 11, 21 ist eine Komponente der Zentraleinheit des Computers 10, 20. Die CPU 12, 22 kann unmittelbar auf den Arbeitsspeicher zugreifen. Weiterhin umfasst jeder der Computer 10, 20 in dem Computercluster zumindest einen Beschleuniger 14, 24 und einen jeweils zugeordneten Spezialspeicher 13, 23.

Der Beschleuniger 14, 24 kann mit der CPU 12, 22 kommunizieren und arbeitet auf dem Spezialspeicher 13, 23, wobei der Spezialspeicher 13, 23 direkt an den Beschleuniger 14, 24 angebunden bzw. gekoppelt ist. Entsprechend werden die CPUs 12, 22 zur Steuerung einer Kommunikation zwischen den Beschleunigern 14, 24 benötigt.

In einer Ausführungsform ist für einen Datentransfer zwischen dem Arbeitsspeicher 11, 21 und dem Spezialspeicher 13, 23 ein Speicherdirektzugriff (engl. direct memory access) vorgesehen. Ein solcher Speicherdirektzugriff ist durch die dicken Pfeile in Figur 1 angedeutet. Ein Speicherdirektzugriff ermöglicht es, dass angeschlossene Peripheriegeräte, wie beispielsweise eine Netzwerkkarte, eine Grafikkarte, und/oder eine Soundkarte ohne Umweg direkt über die CPU mit dem Arbeitsspeicher kommunizieren können, so dass eine schnellere Datenübertragung bei gleichzeitiger Entlastung der CPU ermöglicht wird. Zusätzlich oder alternativ kann für einen Beschleuniger 14, 24 die CPU 12, 22 autonom, ohne Speicherdirektzugriff ausgebildet sein, um auf (vor-)bestimmte Bereiche des Spezialspeichers 13, 23 des Beschleunigers 14, 24 zugreifen zu können.

Im Folgenden wird eine Kommunikation zwischen zwei Beschleunigern 14, 24 zweier Computer 10, 20 in einem Computercluster, wie in Figur 1 gezeigt, beschrieben. Eine Kommunikation zwischen Beschleunigern 14, 24 in dem Computercluster kann einen Datentransfer von einem der Computer 10, 20 zu einem anderen der Computer 10, 20 umfassen und umgekehrt. Die Kommunikation kann in die eine Richtung eine GET-Operation und/oder in die andere Richtung eine PUT-Operation umfassen.

Die in Figur 1 gezeigte Kommunikation zwischen den beiden Beschleunigern 14, 24 erfolgt indirekt, also über weitere Rechen- und/oder Speichereinheiten (z.B. CPUs 12, 22 und/oder Arbeitsspeicher 11, 21).

In Schritt S1 allokiert bzw. belegt die CPU 12 eines der Computer 10 in dem Computercluster Speicherplatz im Arbeitsspeicher 11 des Computers 10. Die CPU schickt dann eine Nachricht an einen entfernten Computer 20 über ein Netzwerk 30 in dem Computercluster, S2. Die Nachricht kann eine Anfrage zur Übertragung von Daten umfassen. Die CPU 22 des adressierten Computers 20 empfängt die Nachricht, S3. Wenn die angefragten Daten nicht im Arbeitsspeicher 21 des Computers 20 vorhanden sind, dann allokiert die CPU 22 einen entsprechenden Speicherplatz im Arbeitsspeicher, S4. Danach initiiert die CPU 22 einen Speicherdirektzugriff der angefragten Daten von dem Spezialspeicher 23 des Beschleunigers 24, S5. Zusätzlich können die angefragten Daten von dem Spezialspeicher 23 in den Arbeitsspeicher 21 kopiert werden. In Schritt S6 triggert bzw. stößt die CPU 22 einen entfernten Speicherdirektzugriff über die Netzwerkschnittstellen 26 und 16 auf den Arbeitsspeicher 11 des entfernten Computers 10, von dem die Anfrage bzw. Nachricht geschickt wurde, an. Die Netzwerkschnittstelle 16 liefert dabei die angefragten Daten und benachrichtigt die CPU 12 des Computers 10, von dem die Nachricht geschickt wurde. Wenn notwendig, kopiert die CPU 12, nachdem die angefragten Daten empfangen wurden, Daten im Arbeitsspeicher 11 von einer Region in eine andere, S7. Danach initiiert die CPU 12 einen Speicherdirektzugriff auf den Spezialspeicher 13 des Beschleunigers 14, S8 und transferiert die angefragten Daten aus dem Arbeitsspeicher 11 in den Spezialspeicher 13 des Beschleunigers.

Wie aus dem mit Bezug auf Figur 1 beschriebenen Kommunikationsablauf zwischen zumindest zwei Beschleunigern in einem Computercluster ersichtlich, erfolgt die Kommunikation zwischen den hier gezeigten Beschleunigern 14 und 24 indirekt über die CPUs 12, 22 der Computer 10, 20 mit entsprechendem Zugriff auf die jeweiligen Arbeitsspeicher 11, 21. Demzufolge ist eine Nutzbarkeit von Beschleunigern in einem Computercluster durch fehlende direkte Kommunikations- und/oder Synchronisationsmöglichkeiten zwischen (entfernten) Beschleunigern nur eingeschränkt möglich. Insbesondere kann eine Leistungs- und/oder Effizienzsteigerung (bezüglich Zeit und/oder Speicherplatzbedarf) durch einen solchen Kommunikationsoverhead zwischen den Beschleunigern nur begrenzt erreicht werden. Demzufolge ist auch eine Parallelisierung der Computer in einem Computercluster zur Leistungssteigerung, Speichererweiterung und/oder verbesserten Fehlertoleranz nicht oder nur eingeschränkt möglich.

Entsprechend kann es wünschenswert sein, eine Leistungssteigerung von Beschleunigern in einem Computercluster zu erzielen, eine Menge an Spezialspeicher für Beschleuniger zu erhöhen und/oder eine Fehlertoleranz zu erhöhen.

Prinzipiell kann durch eine eng gekoppelte Parallelisierung Leistungssteigerung von Beschleunigern in einem Computercluster erreicht werden. Allerdings kann bei kommunikationsintensiven Problemen, welche in einem Cluster bearbeitet werden, eine Leistungssteigerung durch Parallelisierung im Wesentlichen durch einen hohen Kommunikationsoverhead, welcher durch die kommunikationsintensiven Probleme entstehen kann, limitiert sein. Ein kommunikationsintensives Problem kann sich auf Anwendungen und/oder Algorithmen beziehen, welche einen Wesentlichen Teil der Rechenzeit für Kommunikation statt Berechnungen aufwenden.

Cluster mit einem niedrigen Kommunikationsoverhead, also wenn keine oder nur wenige kommunikationsintensive Probleme in dem Cluster bearbeitet werden, werden auch als eng gekoppelte Systeme bzw. Cluster bezeichnet. Eng gekoppelten Clustern stehen lose gekoppelte Systeme bzw. Cluster gegenüber. Lose gekoppelte Systeme weisen einen im Wesentlichen hohen Kommunikationsoverhead auf. Mit einem steigenden Parallelisierungsgrad kann ein solcher Kommunikationsoverhead ab einem bestimmten Punkt einen Leistungsgewinn durch eine Rechenleistung der Computer in dem Cluster überschreiten, weil die Computer in dem Cluster nicht mehr voll ausgelastet werden. Ab diesem Punkt kann dann die Gesamtleistung des Clusters sinken.

Ferner kann durch Aggregation die Menge an Spezialspeicher erhöht werden und/oder durch Parallelisierung die Fehlertoleranz in einem Computercluster erhöht werden. Spezialspeicher 13, 23 von Beschleunigern 14, 24 umfassen normalerweise eine viel kleinere Kapazität als Arbeitsspeicher 11, 21 von CPUs 12, 22. Demzufolge können Spezialspeicher eine knappe Ressource in einem Computer 10, 20 und damit eine knappe Ressource in einem Computercluster darstellen. Werden in einem Computercluster viele Beschleuniger 14, 24 verwendet, so kann durch Aggregation eine zur Verfügung stehende Gesamtmenge an Spezialspeicher erhöht werden, unter der Voraussetzung, dass eine Partitionierung des Problems möglich ist. Ein Problem, beispielsweise eine Anwendung und/oder ein Programm, das in dem Cluster ausgeführt wird, kann partitioniert werden, wenn nach der Partitionierung die einzelnen Partitionen mindestens ein Element der zu bearbeitenden Daten (z.B. ein Element eines Arrays, eines Vektors, und/oder einer Liste) alleine bearbeitet, einen funktionalen Teil der Bearbeitung der Daten alleine übernimmt (z.B. Pipelining) und/oder aus Gründen der Fehlertoleranz einen der beiden vorigen Aspekte redundant ausführt.

Eine Fehlertoleranz kann die Fähigkeit eines Clusters beschreiben, dass trotz eines Auftretens von einzelnen Fehlern eine korrekt Ausführung einer Berechnung in endlicher Zeit sichergestellt werden kann. Fehler können dabei in allen Teilen des Computerclusters auftreten, wie beispielsweise ein Ausfall einzelner Computer (oder Teile davon) in dem Cluster, ein Ausfall von Netzwerkverbindungen des Clusters und/oder ein Ausfall von Netzwerkswitches in dem Cluster. Bei hochgradig parallelen Clustern kann sich dadurch aber eine Wahrscheinlichkeit eines fehlerbedingten Ausfalles einzelner Computer in dem Cluster erhöhen. Um einen solchen fehlerbedingten Ausfall entgegenzuwirken, kann durch Redundanz (d.h. Teilaufgaben werden von mehreren Computern bearbeitet) versucht werden, einzelne Ausfälle zu tolerieren. Auch bei nur einem einzelnen Beschleuniger 14, 24 in einem Cluster besteht die Möglichkeit eines Ausfalles, wobei durch Replikation eine Fehlertoleranz erreicht werden kann.

Insbesondere können die zuvor genannten Vorteile und/oder Verbesserungen dadurch erreicht werden, dass eine für einen Beschleuniger transparente Erweiterung eines Adressraumes vorgesehen wird. Transparent kann dabei auch bedeuten, dass ein Beschleuniger keinen Unterschied zwischen einem lokalen Arbeitsspeicherzugriff und einem Zugriff auf entfernte Speicher in einem anderen Computer in dem Computercluster sieht. Als Adressraum wird eine Menge von Adressen bezeichnet, die sich jede einheitlich und (innerhalb des Adressraumes) eindeutig ansprechen bzw. adressieren lassen. In einem Computer wird der Arbeitsspeicher mit Hilfe von Adressen verwaltet und angesprochen. Ein verfügbarer Adressraum kann sich entweder auf verfügbare Adressen beziehen, welche durch die Größe einer physikalischen Adresse definiert sind, und/oder auf gültige Adressen beziehen, welche auf verfügbare Ressourcen zeigen. Ressourcen sind verfügbar, wenn sie vorhanden sind und konfiguriert sind für eine korrekte Funktionalität. Ist ein Adressraum transparent erweitert, so ist für Ressourcen kein Unterschied zwischen Adressen vor und nach der Erweiterung sichtbar und/oder erkennbar.

Eine transparente Erweiterung kann insbesondere dann vorliegen, wenn globale Adressen ohne Unterschied zu lokalen Adressen genutzt werden können. Insbesondere sind keine besonderen Vorgänge (Konfiguration o.ä.) vor und/oder nach dem eigentlichen Zugriff auf eine globale Adresse im Vergleich zu einem lokalen Zugriff notwendig.

Eine nicht-transparente Erweiterung kann insbesondere dann vorliegen, wenn Adressen der Erweiterung anders als andere Adressen angesprochen und/oder genutzt werden müssen. Damit kann dann ein Beschleuniger in einem Cluster in dem transparent erweiterten Adressraum über Adressen entfernte Daten, die in einem anderen Computer in dem Computercluster gespeichert sind, direkt zugreifen.

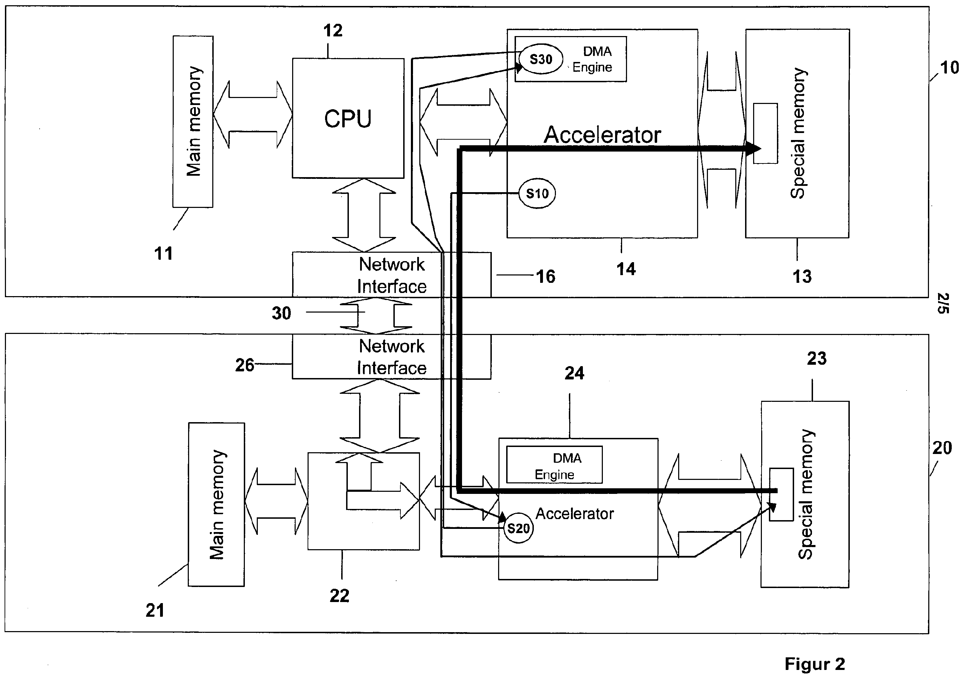

**Figur 2** zeigt eine direkte Kommunikation zwischen Beschleunigern in einem Computercluster. Ein Computercluster kann eine Vielzahl von Computern (auch Knoten oder Server genannt) umfassen. In Figur 2 ist ein Computercluster mit zwei Computern 10, 20 gezeigt. Die Computer 10, 20 des gezeigten Computerclusters entsprechen den in Figur 1 gezeigten Computern 10, 20 und weisen entsprechend die zuvor mit Figur 1 beschriebenen Komponenten 11, 12, 13, 14, 16 und 21, 22, 23, 24, 26 mit den entsprechenden Funktionalitäten auf.

Anders als in Figur 1 erfolgt in dem in Figur 2 gezeigtem Computercluster eine Kommunikation zwischen den Beschleunigern 14 und 24 direkt. Dementsprechend können die Beschleuniger 14, 24 direkt miteinander Nachrichten austauschen, Daten abfragen und/oder Daten austauschen. Eine direkte Kommunikation bedeutet hierbei, dass keine weiteren, die Kommunikation zwischen den Beschleunigern 14, 24 unterstützenden, Komponenten (wie beispielsweise eine CPU 12, 22 und/oder ein Arbeitsspeicher 11, 21) für einen Kommunikationsvorgang mit Nachrichten- und/oder Datenaustausch zwischen den Beschleunigern 14, 24 benötigt werden. Ferner sind keine Kopiervorgänge (beispielsweise in den Arbeitsspeichern 11, 21 der Computer 10, 20) von angefragten und/oder ausgetauschten Daten notwendig.

Figur 2 zeigt eine effizientere und optimierte Kommunikation zwischen entfernten Beschleunigern 14, 24 in verschiedenen Computern 10, 20 in einem Computercluster. Insbesondere sind anders als in der mit Bezug auf Figur 1 gezeigten Kommunikation weder die CPUs 12, 22 noch die Arbeitsspeicher 11, 21 der Computer 10, 20 notwendig. Es werden zudem keine Kopiervorgänge ausgetauschter Daten zu den Arbeitsspeichern 11, 21 vorgenommen. Folglich kann die Kommunikation zwischen den Beschleunigern 14, 24 der entfernten Computer 10, 20 effizienter erfolgen, wobei sowohl weniger Zeit als auch weniger Speicherplatz benötigt wird.

Figur 2 zeigt eine beispielhafte Implementierung einer direkten Kommunikation zwischen Beschleunigern 14, 24 in einem Computercluster. So sind insbesondere die Schritte S10 und/oder S20 optional. Weiterhin stellt Schritt S30 eine pull-type Kommunikation dar, welche auch durch eine push-type Kommunikation ersetzt werden kann. So kann insbesondere die Kommunikation auf den in Figur 2 fett bzw. breit hervorgehobenen Pfeil reduziert werden.

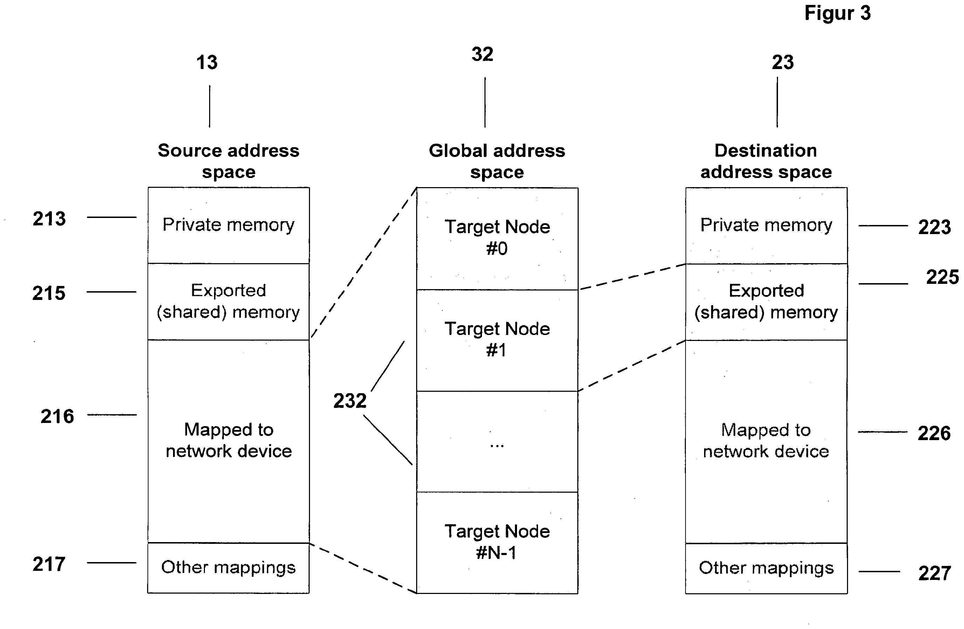

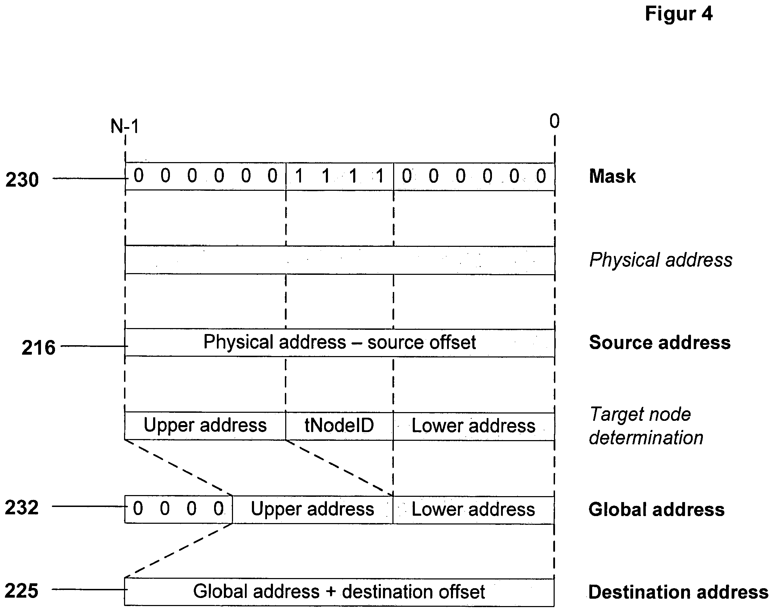

In Schritt S10 fragt der Beschleuniger 14 eines ersten Computers 10 in dem Computercluster Daten von einem Beschleuniger 24 eines anderen Computers 20, also einen entfernten Beschleuniger 24 an. Der entfernte Beschleuniger 24 stellt sicher, dass die angefragten Daten vorhanden und zugreifbar sind und bestätigt den Empfang der Nachricht bzw. der Anfrage des Beschleunigers 14, S20. Wenn der Beschleuniger 14 die Bestätigung von dem entfernten Beschleuniger 24 empfangen hat, benutzt der Beschleuniger 14 einen Speicherdirektzugriff auf globale Adressen, um die angefragten Daten zu holen, S30. Eine Implementierung eines Speicherdirektzugriffs auf globale Adressen in einem globalen Adressraum des Netzwerks 30 ist nachstehend mit Bezug auf Figuren 3 und 4 beschrieben. Die Daten werden dann in einer entsprechenden Antwort transferiert. Ein Datentransfer kann in beide Richtungen stattfinden. Beispielsweise kann ein Beschleuniger 14 von einem entfernten Beschleuniger 24 Daten abrufen und/oder Daten an den entfernten Beschleuniger 24 senden. Für beide Operationen kann es notwendig sein, dass auf dem entfernten Beschleuniger 24 Ressourcen vorbereitet werden. Im Falle der Sendeoperation kann dies beispielsweise den Vorgang der Speicherplatzreservierung betreffen. Im Falle der Abrufoperation kann dies die Bereitstellung der Daten betreffen. Sowohl beim abrufen von Daten von dem entfernten Beschleuniger 24 als auch beim Senden von Daten von dem entfernten Beschleuniger 24 an den (lokalen) Beschleuniger 14, stellt der entfernte Beschleuniger 24 mit einer Bestätigung zunächst sicher, dass der Datentransfer an sich nun stattfinden kann, bevor die Daten übertragen werden. Nachdem der (lokale) Beschleuniger 14 diese Bestätigung erhalten hat, wird ein Speicherdirektzugriff auf globale Adressen benutzt, um den Datentransfer durchzuführen.

Eine globale Adresse bezieht sich auf den globalen Adressraum. Bei Systemen mit verteiltem gemeinsamem Speicher enthält eine globale Adresse eine Kodierung des Zielcomputers zur Wegfindung zu diesem Computer und den gewünschten Daten, die dort abgespeichert sind. Eine Implementierung einer solchen globalen Adresse in einem globalen Adressraum des Netzwerks 30 zur Wegfindung ist nachstehend mit Bezug auf Figuren 3 und 4 beschrieben. Eine transparente Erweiterung eines Adressraums hat zur Folge, dass es aus der Sicht des Beschleunigers keine Unterschiede beim Zugriff auf lokale und globale Adressen gibt. Somit ist der Beschleuniger in der Lage, ohne Einschränkungen auf globale Adressen zuzugreifen.

Dementsprechend kann jeder der Beschleuniger 14, 24 in dem Computercluster autonom auf Daten in Arbeitsspeichern 11, 21 und/oder in SpezialSpeichern 13, 23 im eigenen und/oder in anderen, entfernten Computern 10, 20 im Computercluster zur Kommunikation von Nachrichten und/oder Daten und/oder zur Synchronisation von Daten zwischen entfernten Computern 10, 20 zugreifen. Ein Beschleuniger 14, 24 kann eine Operation autonom ausführen, wenn dafür keine Unterstützung von anderen und/oder übergeordneten Einheiten, insbesondere Rechen- und/oder Speichereinheiten wie zum Beispiels einer CPU 12, 22 und/oder eines Arbeitsspeichers 11, 21 notwendig ist. Lediglich unmittelbar für eine Kommunikation zwischen Beschleunigern 14, 24 notwendige Einheiten wie beispielsweise das Netzwerk 30 und/oder die Netzwerkschnittstelle 16, 26 werden in einer direkten Kommunikation zwischen autonomen Beschleunigern 14, 24 benutzt und/oder verwendet.

Dabei ist für den Beschleuniger 14, 24 und/oder für eine Komponente zum Speicherdirektzugriff ein Zugriff auf entfernte Speicher (Arbeitsspeicher 11, 21 und/oder Spezialspeicher 13, 23) nicht von einem lokalen Zugriff auf den lokalen Arbeitsspeicher 11, 21 zu unterscheiden. Demzufolge ist auch keine Anpassung einer Beschleunigerarchitektur an die direkte Kommunikation zwischen Beschleunigern 14, 24 von verschiedenen Computern 10, 20 in einem Computercluster notwendig. Da ein solcher entfernter Speicherzugriff über globale Adressen durchgeführt wird und diese globalen Adressen transparent für die Beschleuniger 14, 24 in den jeweiligen lokalen Adressraum integriert sind, ist für den Beschleuniger 14, 24 kein Unterschied zwischen lokalen und globalen (insbesondere entfernten) Adressen feststellbar.

Wie mit Bezug auf Figur 2 beschrieben, basiert eine direkte Kommunikation zwischen Beschleunigern 14, 24 in einem Computercluster auf entfernten Schreibe- und/oder Leseoperationen. Die entfernten Schreib- und/oder Leseoperationen dienen im Wesentlichen zur Anfrage und/oder zum Austauschen von Daten zwischen den Beschleunigern 14, 24. Die entfernten Schreib- und/oder Leseoperationen von einem Quell-Beschleuniger 14, 24 zu einem Ziel-Beschleuniger 14, 24 in dem Computercluster werden über das Netzwerk 30 mittels eines Speicherdirektzugriffs auf dem globalen Adressraum des Netzwerks 30 implementiert, so dass eine direkte Kommunikation zwischen den Beschleunigern 14, 24 ermöglicht wird. Dazu werden im Wesentlichen lediglich die Netzwerkschnittstellen 16, 26 der jeweiligen beteiligten Computer 10, 20 modifiziert.

Ein entfernter Schreibvorgang ist ein Schreibvorgang eines Quell-Computers 10, 20, der durch die entsprechende Netzwerkschnittstelle 16, 26 über das Netzwerk 30 an einen Ziel-Computer 10, 20 weitergeleitet wird. Abhängig von der Adresse kann eine beliebige Speichereinheit (auch als Speicher bezeichnet) 11, 13, 21, 23 auf dem Ziel-Computer 10, 20 adressiert werden, insbesondere auch ein Spezialspeicher 13, 23. Eine entfernte Leseoperation wird entsprechend ausgeführt, wobei eine Antwort zurück an den Quell-Computer 10, 20, von dem die Leseoperation angefragt wurde, mit den gelesenen Daten gesendet wird.

Wie mit Bezug auf Figur 2 beschrieb, kann eine direkte Kommunikation zwischen Beschleunigern 14, 24 in einem Computercluster einen, mehrere oder alle der folgenden Verfahrensschritte umfassen:
1. Ein Quellbeschleuniger (z.B. 14) startet mit einer Schreibeoperation auf eine vorher bekannte globale Adresse im globalen Adressraum des Netzwerks 30 des Computerclusters. Daten sind entweder im Beschleuniger 14 und/oder in dem den Beschleuniger 14 zugeordnetem Spezialspeicher 13 verfügbar.
2. Eine Quellnetzwerkschnittstelle (z.B. 16) empfängt die Schreibanfrage in dem globalen Adressraum, identifiziert den adressierten Ziel-Computer (z.B. 20) in dem Netzwerk 30 des Clusters und leitet die Anfrage mit den Daten über das Netzwerk 30 weiter.
3. Eine entsprechende Zielnetzwerkschnittstelle (z.B. 26) empfängt die Anfrage, extrahiert Zieladresse und Daten aus der globalen Adresse des globalen Adressraums und schreibt diese an eine entsprechende Zieladresse im globalen Adressraum. Diese Zieladresse kann auf einen Spezialspeicher (z.B. Spezialspeicher 23 des Ziel-Beschleunigers 24) zeigen. In diesem Fall wird die Anfrage direkt an den Spezialspeicher 23 des Ziel-Beschleunigers 24 weitergeleitet. Andere Speichereinheiten (wie beispielsweise Arbeitsspeicher 21) des Ziel-Computers 20 können auch adressiert werden.
4. Wenn der Ziel-Beschleuniger 24 schon auf die Daten wartet, kann er auf wohlbekannten Adressen in seinem Spezialspeicher 23 pollen, welche vom Quell-Beschleuniger 14 nach der Datenübertragung geändert werden.

Schritte 1-3 spezifizieren eine entfernte Schreiboperation, welche eine einfache Form einer Kommunikationsmethode ist (auch als eager push-type Kommunikation bezeichnet). Darüber hinaus kann eine solche Kommunikationsmethode verwendet werden, um komplexere Kommunikationsmethoden, wie beispielsweise eine Rendezvous-Kommunikation, zu bilden.

Die entfernte Schreiboperation in einem Computercluster auf eine globale Adresse im globalen Adressraum des Netzwerks 30 in Schritt 1 kann durch eine Leseoperation auf eine globale Adresse im globalen Adressraum des Netzwerks 30 ersetzt werden. Eine solche entfernte Leseoperation wird auch als eine eager pull-type Kommunikation bezeichnet. Diese entfernte Leseoperation entspricht im Wesentlichen der zuvor beschriebenen entfernten Schreiboperation, wobei eine Anfrage eines Quell-Beschleunigers (z.B. 14) keine Daten und das Ziel bzw. der Ziel-Beschleuniger (z.B. 24), insbesondere der Spezialspeicher (z.B. 23) auf dem Zielcomputer, z.B. 20 antwortet auf die Anfrage mit einem Antwortpaket welches die Daten enthält. Da solche sogenannten Split-Phase Protokolle Anfragen und Antworten trennen, kann ein Tag verwendet werden, um zu einem späteren Zeitpunkt eine Zuordnung von Antworten zu Anfragen wieder zu ermöglichen. Hierfür werden entsprechende Strukturen durch die Netzwerkschnittstelle (z.B. 26) des Zielcomputers (z.B. 20) verwaltet, um für jede ankommende Anfrage den ursprünglichen Quellcomputer (z.B. 10) zu speichern. Wenn später eine Antwort von dem Ziel-Spezialspeicher (z.B. 23) zurückkommt, wird diese dann an den an den entsprechenden Quellcomputer (z.B. 10), insbesondere den Quell-Beschleuniger 24, weitergeleitet.

In Split-Phase Protokollen werden Tags zum Abgleich von Antworten mit Anfragen genutzt. Im Zusammenhang mit globalen Adressräumen können Anfragen von verschiedenen Quell-Beschleunigern 14, 24 und daher verschiedenen Tag-Domains einen einzelnen Ziel-Beschleuniger 14, 24 adressieren. In diesem Fall sind Kollisionen von Tags möglich und müssen für eine korrekte Ausführung ausgeschlossen werden. Hereinkommende Tags werden daher in einen neuen, lokal eindeutigen, Tag übersetzt. Der ursprüngliche Tag wird zusammen mit anderen Informationen wie Quellidentifizierung in einer Tabelle abgelegt. Wenn eine Netzwerkschnittstelle 16, 26 zu einem späteren Zeitpunkt eine Antwort vom Speicherkontroller erhält, wird der Tag der Antwort mit allen gültigen Einträgen in der Tabelle verglichen, und somit der ursprüngliche Tag sowie die Quellidentifizierung ermittelt. Diese werden für die Rücksendung der Antwort über das Netzwerk verwendet.

Eager pull-type und eager push-type Kommunikation wird im Folgenden zusammenfassend auch als Eager-Kommunikation für Schreib-/Leseoperationen zwischen entfernten Beschleunigern 14, 24 in einem Computercluster bezeichnet.

Die entfernte Schreiboperation in einem Computercluster in direkter Kommunikation zwischen entfernten Beschleunigern 14, 24 kann als eine Form von sogenannter Eager-Kommunikation bezeichnet werden. Eine solche Kommunikation ist "eager" in dem Sinne, dass während der Kommunikation zwischen den Beschleunigern 14, 24 keine Verhandlung, wann und zu/von wem eine Kommunikation stattfindet, erfolgt. Quell-Puffer und Ziel-Puffer wurden bereits vorher ausgehandelt und damit kann die Datenübertragung sofort beginnen. Quell-Puffer und Ziel-Puffer werden anhand globaler Adressen im globalen Adressraum des Netzwerks 30 identifiziert. Für eine eager-Kommunikation werden entsprechende Puffer vor der Kommunikation (bzw. bei der Erstellung logischer Verbindungen) im globalen Adressraum angelegt und die angelegten Adressen entsprechend mit den beteiligten Beschleuniger 14, 24 bzw. deren entsprechenden Spezialspeichern 13, 23 ausgetauscht werden. Beispielsweise kann eine Eager-Kommunikation für kurze Datenübertragungen, beispielsweise bei Datenmengen zwischen 4Byte und 128kByte, geeignet, die leicht in vorreservierten Puffer untergebracht werden können.

Im Gegensatz zur Eager-Kommunikation beginnt eine sogenannte Rendezvous-Kommunikation mit einer Anfrage, Daten zu übertragen. Diese Anfrage wird von der Quelle (beispielsweise Beschleuniger 14) zum Ziel (beispielsweise Beschleuniger 24) weitergeleitet. Nach Erhalt dieser Anfrage, reserviert das Ziel eine geeignete Menge an Puffer (z.B. einen Speicherbereich im zugeordneten Spezialspeicher 23 des Ziel-Beschleunigers 24) und sendet eine Bestätigung zurück and den Quell-Beschleuniger 14. Der Quell-Beschleuniger 14 zeigt an, dass eine Datenübertragung nun beginnen kann. Rendezvous-Protokolle können in verschiedenen Weisen realisiert werden, wobei die Protokolle auf Lese- und/oder Schreiboperationen basieren können. Beispiele für eine Implementierung solcher Rendezvous-Protokolle sind in nachstehender Tabelle aufgezeigt und umfassen beispielsweise eine Nutzung von push-type für eine Rendezvousnachricht (Starten des Rendezvous), und pull-type für den eigentlichen Datentransfer zwischen den beteiligten Beschleunigern 14, 24.

Eine Rendezvous-Kommunikation zwischen Beschleunigern 14, 24 in einem Computercluster kann mit einer Eager-Kommunikation beginnen, um eine Anfrage von einem Quell-Beschleuniger 14 an einen Ziel-Beschleuniger 24 zu senden. Die Anfrage umfasst ein Schreiben durch den Quell-Beschleuniger 14 einer Rendezvous-Kommunikationsanforderung an eine bekannte Adresse in dem Spezialspeicher 23 des Ziel-Beschleunigers 24. Der Ziel-Beschleuniger 24 empfängt diese Anfrage, und stellt sicher, dass genügend Puffer bzw. Speicherplatz in seinem Spezialspeicher 23 verfügbar ist. Der Ziel-Beschleuniger 24 schreibt eine entsprechende Bestätigung an eine bekannte Adresse des Spezialspeichers 13 des Quell-Beschleunigers 14 und/oder beginnt, entsprechende Daten mittels entfernten Leseoperationen direkt vom Spezialspeicher 13 des Quell-Beschleunigers 14 zu holen.

Wird eine Bestätigung zur Anfrage in die bekannte Adresse des Spezialspeichers 13 des Quell-Beschleunigers 14 geschrieben, so umfasst die Bestätigung eine entsprechende Zieladresse im Spezialspeicher 23 des Ziel-Beschleunigers 23, so dass der Quell-Beschleuniger 14 autonom die Daten der durchgeführten Schreiboperation auf diese Zieladresse schreiben kann.

Werden entsprechende Daten mittels entfernten Leseoperationen direkt vom Spezialspeicher 13 des Quell-Beschleunigers 14 geholt, ist eine entsprechende Quelladresse im Spezialspeicher 13 des Quell-Beschleunigers 14 in der ersten Anfrage des Quell-Beschleunigers 23 enthalten.

Benachrichtigung über beendete Vorgänge können durch Pollen auf Speicheradressen realisiert werden. Solche Speicheradressen sind bevorzugt im Spezialspeicher 13, 23 der entsprechenden Beschleuniger 14, 24 zu platzieren. Ein Austausch der Speicheradressen kann vor einer Kommunikation (z.B. bei der Erstellung logischer Verbindungen) zwischen den Beschleunigern 14, 24, bevorzugt kombiniert mit einer laufender Aktualisierung nach jeder Kommunikation zwischen den Beschleunigern 14, 24 (auch als fortlaufende Adressen im Ringpuffer bezeichnet) und/oder als Parameter bei Kommunikationsinitialisierung (z.B. Rendezvousnachricht) zwischen den Beschleunigern 14, 24 erfolgen. Diese Speicheradressen können entweder dediziert sein, können aber auch Teil der übertragenen Daten sein. Im letzteren Fall muss sichergestellt werden dass dieser Teil der Daten auch durch die Kommunikation geändert wird.

Folgende Tabelle beschreibt beispielhafte Kommunikationsmethoden zur Implementierung einer direkten Kommunikation zwischen Hardwarebeschleunigern 14, 24 in einem Computercluster, wie beispielsweise in dem in Figur 2 gezeigten Cluster, zusammen:

| **Kommunikationsm ethode** | **Initialisierung** | **Datentransfer** | **Benachrichti gung über Beendung** |
|---|---|---|---|
| **Eager push-type** | Vorabbekannte Zieladresse, z.B. als dedizierter Ringpuffer (einer pro Quelle) auf Zielseite Nutzung von eager push-type zum Austausch von Kommunikationsinformationen. Eine Anfrage wird von der Quelle zum Ziel gesendet, welches dann mit einer Bestätigung antwortet. Die Anfrage enthält Größe der Nutzdaten, die Bestätigung die Zieladresse. | Entfernte Schreiboperatio nen, initiiert durch Quellknoten | Entferntes Schreiben auf bekannte Adresse oder durch Pollen auf Wertänderung (Teil der Nutzdaten) |
| **Rendezvous push-type** | | | |
| **Eager pull-type** | Vorabbekannte Quelladresse, z.B. ein dedizierter Ringpuffer für jedes Ziel auf der Quellseite. Eventuell Polling auf Quelladressen zur Benachrichtigung über neue Daten. | Entferntes Lesen, initiiert durch Zielknoten | Nutzung von eager push-type zur Benachrichtig ung |
| **Rendezvous pull-type** | Nutzung von eager push-type zum Austausch von Kommunikationsinformationen. Anfrage wird von Ziel zur Quelle gesendet und beinhaltet entweder einen Tag oder die Adresse der angefragten Daten. Quelle antwortet mit Bestätigung, eventuell inklusive Quelladresse. | | |

Implementierungen können oben beschriebene Grundkommunikationstypen als Teil einer komplexeren Kommunikationsmethode durch andere Grundkommunikationstypen austauschen. Zum Beispiel kann als Teil der Rendezvous-Kommunikation eager push-type durch eager pull-type ersetzt werden, angenommen dass vorher ein entsprechender Austausch von Kommunikationsinformationen hinsichtlich der Quell- und/oder Zieladressen stattgefunden hat.

Eine Implementierung von einer oder mehreren der zuvor beschriebenen Kommunikationsmethoden zur direkten Kommunikation zwischen Beschleunigern 14, 24 in einem Computercluster erfordert lediglich eine entsprechende Modifizierung der Netzwerkschnittstellen 16, 26 der Computer 10, 20 in dem Computercluster. Die Beschleuniger 14, 24 werden nicht modifiziert, so dass jeder handelsübliche Beschleuniger 14, 24 in der direkten Kommunikation verwendet werden kann. Die Netzwerkschnittstellen 16, 26 können eine entsprechende Unterstützung komplett transparent implementieren, so dass Unterschiede zwischen einem Zugriff auf lokalen und/oder entfernten Speichereinheiten für die Beschleuniger nicht erkennbar sind.

Für eine verbesserte Fehlertoleranz können ausstehende Anfragen überwacht werden. Im Falle eines Verlustes solcher Anfragen können entsprechende Fehler zurück an die anfragende Einheit (CPU 12, 22 und/oder Beschleuniger 14, 24) gemeldet werden. Ansonsten könnte diese Einheit dauerhaft blockierend auf die Antwort warten. Zu diesem Zweck implementiert die Netzwerkschnittstelle 16, 26 eine Tabelle mit einem Eintrag für jeden Tag. Jedem Eintrag ist ein Zähler zugewiesen, welcher zu zählen beginnt sobald eine Anfrage mit einem entsprechenden Tag versendet wird. Nach Ablauf des Zählers wird eine Fehlerantwort generiert und an die anfragende Einheit zurückgesendet. Falls in diesem Fall die zugehörige Antwort vom Netzwerk 30 doch noch einkommt, wird sie verworfen. Zusammen mit der Fehlerantwort können auch andere Aktionen ausgelöst werden, wie Interrupts und/oder das Setzen von Fehlerbits im Statusregister.

Für eine vollständige Unterstützung von Konsistenzmodellen kann die Netzwerkschnittstelle 16, 26 ausstehende entfernte Schreibeoperationen überwachen und feststellen, wann die zugehörigen Änderungen sichtbar werden. In der Regel wird eine Schreiboperation sichtbar sobald die adressierten Speicherbereiche aktualisiert wurden. Da hier entfernte Schreiboperationen unterschiedliche Verzögerungen erfahren können, können ohne Benachrichtigung keine Annahmen über den Zeitpunkt gemacht werden. Da Schreiboperationen üblicherweise als "posted requests" ausgeführt werden, werden allerdings keine Antworten generiert und der Zeitpunkt der Ausführung ist somit nicht bekannt. Die Netzwerkschnittstelle 16, 26 kann daher optional posted in non-posted Requests übersetzen. Dann wird das Ziel automatisch nach der Ausführung einer non-posted Schreiboperation eine Antwort generieren. Ein Zähler im Quellnetzwerkgerät wird automatisch für jede solche ausgehende non-posted Operation inkrementiert, und für jede hereinkommende entsprechende Antwort dekrementiert. Falls dieser Zähler Null ist, ist sichergestellt dass es keine offenen ausstehenden Schreiboperationen gibt und ein Synchronisationspunkt erreicht ist. Zu beachten ist das Antworten auf übersetzte non-posted Anfragen nicht weitergeleitet werden, sondern nach Dekrementierung des Zählers verworfen werden.

**Figur 3** zeigt beispielhafte Adressräume für eine Implementierung direkter Kommunikationsmethoden für eine direkte Kommunikation zwischen Beschleunigern 14, 24 in einem Computercluster mittels eines Speicherdirektzugriffs auf einem globalen Adressraum 32 des Netzwerks 30 des Computerclusters

Lokale Zugriffe von einem Beschleuniger 14, 24 auf eine Netzwerkschnittstelle 16, 26 sind auch nur lokal gültig. Ein Beschleuniger 14, 24 kann in seinem Spezialspeicher 13, 23 einen Adressraum 216, 226 für die entsprechende Netzwerkschnittstelle 16, 26 umfassen. Ein solcher Netzwerkschnittstellenadressraum wird auch als Quelladressraum oder globale Quelladresse 216, 226 in einer Kommunikation zwischen Quell- und Ziel-Computern 10, 20 bezeichnet.

Ein Spezialspeicher 13, 23 und/oder jeder andere Speicher eines Computers 10, 20 kann ein oder mehrere Adressräume umfassen. Beispielsweise umfasst der Speicher 13, 23 einen privaten bzw. lokalen Adressraum 213, 223, einen verteilten Adressraum 215, 225 für eine entfernte Kommunikation, einen Netzwerkschnittstellenadressraum 216, 226, und/oder einen weiteren Adressraum 217, 227.

Von außerhalb eines Beschleunigers 14, 24 kann der Zugriff auf den Spezialspeicher 13, 23 eingeschränkt sein, üblicherweise um Adressraum zu sparen. In diesem Fall existiert im Beschleuniger 14, 24 ein Registersatz welcher eine Apertur (z.B. 215, 225) definiert, welche einen Teil des Spezialspeichers 13, 23 von außen zugreifbar macht. Diese Apertur kann u.a. durch Start- und Endadresse definiert sein. Vor einem Zugriff auf einen Bereich des Spezialspeichers 13, 23 außerhalb der aktuellen Apertur muss die Apertur umdefiniert werden um eben diesen angefragten Bereich zu enthalten.

Die CPU 12, 22 kann die Apertur durch Lese- und/oder Schreiboperationen kontrollieren. Auf ähnliche Weise können auch entfernte CPU 12, 22 und/oder Beschleuniger 14, 24 durch entferntes Lesen und/oder Schreiben die Apertur kontrollieren. Für eine einzelne entfernte Speichereinheit ist dies ohne Probleme möglich, falls mehrere entfernte Speichereinheiten um eine lokale Apertur konkurrieren müssen entsprechende Protokolle sicherstellen dass zu jedem Zeitpunkt es nur einen entfernten Nutzer dieser lokalen Apertur gibt und/oder dass eine lokale Apertureinstellung die Wünsche mehrerer entfernter Nutzer befriedigt.

Während einer direkten Kommunikation, insbesondere eine Schreib- und/oder Leseoperation, zwischen Beschleunigern 14, 24 in einem Computercluster wird ein Speicherdirektzugriff auf dem globalen Adressraum 32 des Netzwerks 30 des Computerclusters ausgeführt. Ist beispielsweise Beschleuniger 14 Quell-Beschleuniger 14 und Beschleuniger 24 Ziel-Beschleuniger 24, so wird eine Quelladresse 216 im Spezialspeicher 13 des Quell-Beschleunigers 14 in eine globale Adresse 232 in dem globalen Adressraum 32 des Netzwerks 30 übersetzt. Beispielsweise greift der Quell-Beschleuniger 14 auf eine physikalische Adresse in einem für die Netzwerkkommunikation vorgesehenen Adressraum 216 seines Spezialspeichers 13 zu, so dass eine entsprechende Anfrage an die Netzwerkschnittstelle 16 des Quell-Computers 10 weitergeleitet werden kann. Über die Netzwerkschnittstelle 16 wird diese Adresse 216 der Anfrage in eine globale Adresse 232 auf dem globalen Adressraum 32, bevorzugt durch Subtraktion der Startaddresse (Offset) dieser Adressregion 216, übersetzt.

Die globale Adresse 232 im globalen Adressraum 32 kann zur Identifizierung des Ziel-Computers 20 und damit des Ziel-Beschleunigers 24 verwendet werden. Die globale Adresse 232 im globalen Adressraum 32 des Netzwerks 30 wird in eine entsprechende Zieladresse 225 im Spezialspeicher 23 des Ziel-Beschleunigers 24 übersetzt. In anderen Worten, basierend auf dieser Globaladresse 232 im globalen Adressraum 32 wird der Ziel-Beschleuniger 24 ermittelt.

Eine Ermittlung des Zielbeschleunigers 24 anhand der Globaladresse 232 kann durch eine und/oder mehrere der nachfolgend beschriebenen Verfahren ermittelt werden. Eine bevorzugte Implementierung dieser Ziel-Ermittlung ist eine Maske, welche mit Bezug auf Figur 4 beschrieben ist. Ist der Ziel-Beschleuniger 24 ermittelt, wird die Anfrage über das Netzwerk 30 zum Ziel-Beschleuniger 24 weitergeleitet. Am Ziel-Beschleuniger 24 wird die Globaladdresse 232 des globalen Adressraums 32 in eine entsprechende Zieladdresse 225 im Spezialspeicher 23 des Ziel-Beschleunigers 24 übersetzt, indem der Offset der exportierten Speicherregion (z.B. Spezialspeicher) hinzuaddiert wird. Diese Addresse wird als physikalische Zieladdresse 225 genutzt, und die Anfrage somit zu einem lokalen Speicherkontroller des Spezialspeichers 23 des Ziel-Beschleunigers 24 weitergeleitet.

**Figur 4** zeigt eine Masken-basierte Identifizierung eines Ziel-Beschleunigers (z.B. 24) zur Implementierung eines Speicherdirektzugriffs auf einem globalen Adressraum 32 (vgl. Figur 3) bei direkter Kommunikation zwischen Beschleunigern 14, 24 in einem Computercluster.

Mittels einer Maske 230 wird ein Teil der vom Quell-Beschleuniger 14 empfangenen globalen Quelladresse 216 festgelegt, welche als Bitkombination die Ziel-Beschleuniger-Identifizierung (tNodelD) festlegen. Wie in Figur 4 gezeigt, werden durch die Maske 230 irrelevanten Bits der globalen Quelladresse 216 ausmaskiert, und die relevanten in eine Globaladresse 232 zur Ziel-Identifizierung überführt. Ein logisches UND-Operation kann für Verknüpfung der Maske 230 mit der globalen Quelladresse 216 genutzt werden. Für einen nichtfortlaufenden Bereich von 1s in der Maske 230 werden die entsprechenden Segmente auch noch kompaktiert, bevor der Bitbereich als Zielidentifizierung genutzt werden kann. Für die Globaladresse 232 werden die vorher ausmaskierten Bits ausgewählt und durch Kompaktierung fortlaufend gemacht.

Eine Maske 230 partitioniert den globalen Adressraum 32 in mehrere Partitionen, eine für jeden potentiellen Ziel-beschleuniger 14, 24 in dem Cluster. Deren Anzahl entspricht der 2er-Potenz der Anzahl 1s in der Maske 230. Weiterhin hat jede Partition die gleiche Größe.

Bei einer Intervall-basierten Ziel-Identifizierung zur Implementierung eines Speicherdirektzugriffs aud dem globalen Adressraum 32 wird ein Satz von Intervallen genutzt, wobei jedes Intervall aus einer Startadresse, einer Länge und einer Zielidentifizierung besteht. Die Quelladresse wird mit jedem Intervall (Startadresse und Länge) verglichen. Falls eine Intervall getroffen wird (start <= address <= start+length) wird die zugehörige Zielidentifizierung genutzt. Die Länge eines Intervalls kann optional mit einer Endadresse ersetzt werden. Falls mehr als ein Intervall aufgrund von Überlappungen getroffen wird, dann wird ein Prioritätsschema für eine eindeutige Zielidentifizierung genutzt. Falls kein Intervall getroffen wird, kann ein masken-basierter Ansatz genutzt werden um einen gültigen Ziel-Beschleuniger 14, 24 zu ermitteln.

Intervalle bieten mehr Flexibilität als eine Maske 230. Die Anzahl an möglichen Ziel-Beschleunigern 14, 24 muss nicht eine 2er-Potenz sein, und die Größe der einzelnen Partitionen kann variieren. Jedoch ist die Anzahl an Ziel-Beschleunigern 14, 24 durch die Anzahl der Intervalle limitiert.

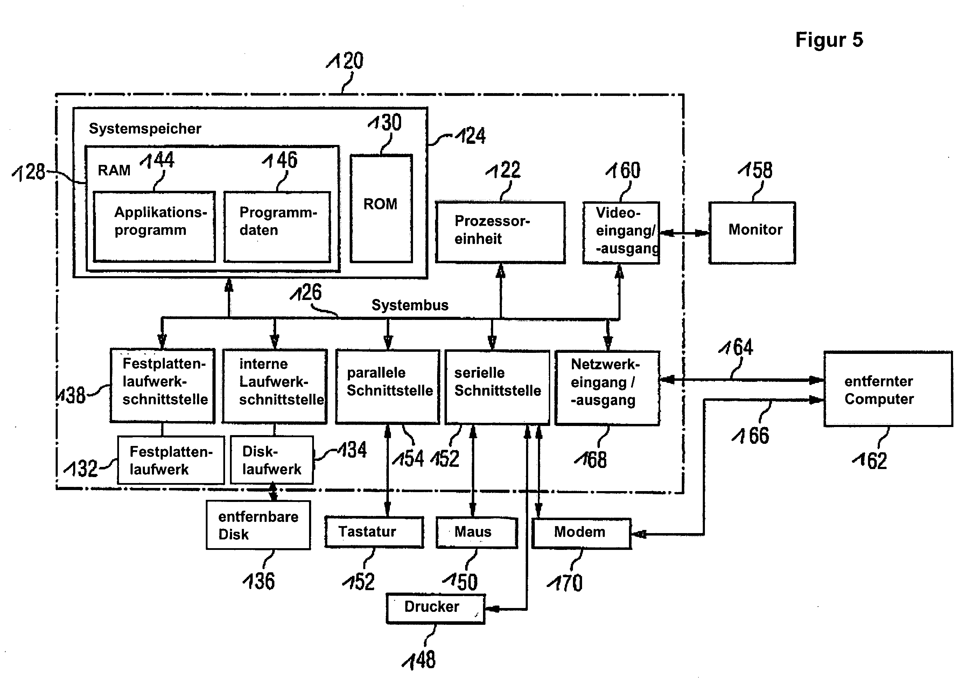

Bezugnehmend auf **Figur 5** wird ein beispielhaftes System zum Implementieren der Erfindung beschrieben. Ein beispielhaftes System umfasst eine universelle Rechnereinrichtung in der Form einer herkömmlichen Rechnerumgebung 120 z.B. ein "personal computer" (PC) 120, mit einer Prozessoreinheit 122, einem Systemspeicher 124 und einem Systembus 126, welcher eine Vielzahl von Systemkomponenten, unter anderem den Systemspeicher 124 und die Prozessoreinheit 122, verbindet. Die Prozessoreinheit 122 kann arithmetische, logische und/oder Kontrolloperationen durchführen, indem auf den Systemspeicher 124 zugegriffen wird. Der Systemspeicher 124 kann Informationen und/oder Instruktionen zur Verwendung in Kombination mit der Prozessoreinheit 122 speichern. Der Systemspeicher 124 kann flüchtige und nichtflüchtige Speicher, beispielsweise "random access memory" (RAM) 128 und "Nur-Lesespeicher" (ROM) 130 beinhalten. Ein Grund-Eingabe-Ausgabe-System (BIOS), das die grundlegenden Routinen enthält, welche helfen, Informationen zwischen den Elementen innerhalb des PCs 120, beispielsweise während des Hochfahrens, zu transferieren, kann in dem ROM 130 gespeichert sein. Der Systembus 126 kann eine von vielen Busstrukturen sein, unter anderem ein Speicherbus oder ein Speichercontroller, ein peripherer Bus und ein lokaler Bus, welcher eine bestimmte Busarchitektur aus einer Vielzahl von Busarchitekturen verwendet.

Der PC 120 kann weiterhin ein Festplattenlaufwerk 132 zum Lesen oder Schreiben einer Festplatte (nicht gezeigt) aufweisen und ein externes Disklaufwerk 134 zum Lesen oder Schreiben einer entfernbaren Disk 136 bzw. eines entfernbaren Datenträgers. Die entfernbare Disk kann eine magnetische Disk bzw. eine magnetische Diskette für ein magnetisches Disklaufwerk bzw. Diskettenlaufwerk oder eine optische Diskette wie z.B. eine CD-ROM für ein optisches Disklaufwerk sein. Das Festplattenlaufwerk 132 und das externe Disklaufwerk 134 sind jeweils mit dem Systembus 126 über eine Festplattenlaufwerkschnittstelle 138 und eine externe Disklaufwerkschnittstelle 140 verbunden. Die Laufwerke und die zugeordneten computerlesbaren Medien stellen einen nichtflüchtigen Speicher computerlesbarer Instruktionen, Datenstrukturen, Programm-Modulen und anderer Daten für den PC 120 zur Verfügung. Die Datenstrukturen können die relevanten Daten zum Implementieren eines wie oben beschriebenen Verfahrens aufweisen. Obwohl die beispielhaft beschriebene Umgebung eine Festplatte (nicht gezeigt) und eine externe Disk 142 verwendet, ist für den Fachmann offensichtlich, dass andere Typen computerlesbarer Medien, welche computerzugreifbare Daten speichern können, in der beispielhaften Arbeitsumgebung verwendet werden können, wie z.B. magnetische Kassetten, Flash-Memory Karten, digitale Videodisketten, Random-Access-Speicher, Nur-Lesespeicher, usw.

Eine Vielzahl von Programm-Modulen, insbesondere ein Betriebssystem (nicht gezeigt), ein oder mehrere Applikationsprogramme 144 oder Programm-Module (nicht gezeigt) und Programmdaten 146 können auf der Festplatte, der externen Disk 142, dem ROM 130 oder dem RAM 128 gespeichert werden. Die Applikationsprogramme können zumindest einen Teil der Funktionalität, wie in Figur 2 gezeigt, umfassen.

Ein Benutzer kann Kommandos und Information, wie oben beschrieben, in den PC 120 anhand von Eingabevorrichtungen, wie z.B. einer Tastatur bzw. eines Keyboards 148 und einer Computermaus bzw. einem Trackball 150 eingeben. Andere Eingabevorrichtungen (nicht gezeigt) können ein Mikrofon und/andere Sensoren, einen Joystick, ein Spielpolster bzw. -kissen, einen Scanner oder ähnliches umfassen. Diese oder andere Eingabevorrichtungen können mit der Prozessoreinheit 122 anhand einer seriellen Schnittstelle 152 verbunden sein, welche mit dem System 126 gekoppelt ist, oder können anhand anderer Schnittstellen, wie z.B. einer parallelen Schnittstelle 154, eines Spieleports oder eines universellen seriellen Busses (USB) verbunden sein. Weiterhin kann Information mit einem Drucker 156 gedruckt werden. Der Drucker 156 und andere parallele Eingabe/Ausgabevorrichtungen können mit der Prozessoreinheit 122 durch die parallele Schnittstelle 154 verbunden sein. Ein Monitor 158 oder andere Arten von Anzeigevorrichtung(en) ist/sind mit dem Systembus 126 mittels einer Schnittstelle, wie z.B. eines Videoeingang/-ausgangs 160 verbunden. Zusätzlich zu dem Monitor kann die Rechnerumgebung 120 andere periphere Ausgabevorrichtungen (nicht gezeigt) wie z.B. Lautsprecher oder akustische Ausgänge umfassen.

Die Rechnerumgebung 120 kann mit anderen elektronischen Vorrichtungen z.B. einem Computer, einem Schnurtelefon, einem schnurlosen Telefon, einem persönlichen digitalen Assistenten (PDA), einem Fernseher oder ähnlichem kommunizieren. Um zu kommunizieren, kann die Rechnerumgebung 120 in einer vernetzten Umgebung arbeiten, wobei Verbindungen zu einem oder mehreren elektronischen Vorrichtungen verwendet werden. Figur 5 stellt die mit einem "remote Computer" bzw. entfernten Computer 162 vernetzte Rechnerumgebung dar. Der entfernte Computer 162 kann eine andere Rechnerumgebung, wie z.B. ein Server, ein Router, ein Netzwerk-PC, eine gleichwertige bzw. "peer" Vorrichtung oder andere gewöhnliche Netzwerkknoten sein und kann viele oder alle der hinsichtlich der Rechnerumgebung 120 oben beschriebenen Elemente umfassen. Die logischen Verbindungen, wie sie in Figur 5 dargestellt sind, umfassen ein "local area network" (LAN) 164 und ein "wide are network" (WAN) 166. Solche Netzwerkumgebungen sind alltäglich in Büros, firmenweiten Computernetzwerken, Intranetzen und dem Internet.

Wenn eine Rechnerumgebung 120 in einer LAN-Netzwerkumgebung verwendet wird, kann die Rechnerumgebung 120 mit dem LAN 164 durch einen Netzwerkeingang/-ausgang 168 verbunden sein. Wenn die Rechnerumgebung 120 in einer WAN-Netzwerkumgebung verwendet wird, kann die Rechnerumgebung 120 ein Modem 170 oder andere Mittel zum Herstellen einer Kommunikation über das WAN 166 umfassen. Das Modem 170, welches intern und extern bezüglich der Rechnerumgebung 120 sein kann, ist mit dem Systembus 126 mittels der seriellen Schnittstelle 152 verbunden. In der Netzwerkumgebung können Programm-Module, welche relativ zu der Rechnerumgebung 120 dargestellt sind, oder Abschnitte davon in einer entfernten Speichereinrichtung gespeichert sein, welche an oder von einem entfernten Computer 162 zugreifbar bzw. systemeigen sind. Weiterhin können andere Daten, welche für das oben beschriebene Verfahren bzw. System relevant sind, auf oder von dem entfernten Computer 162 zugreifbar vorliegen.

### Bezugszeichenliste

10, 20 Computer
11,21 Arbeitsspeicher bzw. Hauptspeicher
12, 22 CPU bzw. (Hauptprozessor)
13,23 Spezialspeicher
14, 24 (Hardware-)Beschleuniger
16, 26 Netzwerkschnittstelle
30 Netzwerk
32 globaler Adressraum
213, 223 lokaler Adressraum bzw. lokale Adresse
215, 225 verteilter Adressraum bzw. verteilte Adresse
216, 226 Netzwerkschnittstellenadressraum bzw. Netzwerkschnittstellenadresse 217, 227 weiterer Adressraum bzw. weitere Adresse
230 Maske
232 globale Adresse bzw. Globaladresse
S1-S8 indirekte Kommunikation zwischen Beschleunigern
S10, S20, S30 direkte Kommunikation zwischen Beschleunigern
120 Rechnerumgebung
122 Prozessoreinheit
124 Systemspeicher
126 Systembus
128 random access memory (RAM)
130 Nur-Lesespeicher (ROM)
132 Festplattenlaufwerk
134 Disklaufwerk
136 entfernbare Disk
138 Festplattenlaufwerkschnittstelle
140 Disklaufwerkschnittstelle
142 externe Disk
144 Applikationsprogramm
146 Programmdaten
148 Tastatur
150 Computermaus/Trackball
152 serielle Schnittstelle
154 parallele Schnittstelle
156 Drucker
158 Monitor
160 Videoeingang/ -ausgang
162 entfernter Computer
164 "local area network" (LAN)
166 "wide area network" (WAN)
168 Netzwerkeingang/ -ausgang
170 Modem

## Patentansprüche

1. System zur direkten Kommunikation zwischen Hardwarebeschleunigern (14, 24) in einem Computercluster, umfassend:
einen ersten Hardwarebeschleuniger (14) in einem ersten Computer (10) eines Computercluster; und
einen zweiten Hardwarebeschleuniger (24) in einem zweiten Computer (20) des Computercluster;
wobei der erste (10) und der zweite (20) Computer verschieden voneinander sind und ausgebildet sind, entfernt über ein Netzwerk (30) kommunizieren zu können,
**dadurch gekennzeichnet, dass** der erste Hardwarebeschleuniger (14) ausgebildet ist, Daten von dem zweiten Hardwarebeschleuniger (24) anzufragen und Daten mittels eines Speicherdirektzugriffs auf einem globalen Adressraum (32) von dem zweiten Computer (20) abzurufen und/oder zu dem zweiten Computer (20) zu übermitteln, so dass der erste und zweite Hardwarebeschleuniger (14, 24) direkt miteinander kommunizieren, wobei die direkte Kommunikation zwischen den Hardwarebeschleunigern (14, 24) direkt über das Netzwerk (30) und entsprechende Netzwerkschnittstellen (16, 26) auf den Computern (10, 20) in dem Cluster und ohne Unterstützung von CPUs (12, 22) und/oder Arbeitsspeicher (11, 21) des ersten (10) und zweiten (20) Computers erfolgt.

2. System nach einem oder mehreren der vorangehenden Ansprüche, wobei der globale Adressraum transparent ist, so dass die Beschleuniger (14, 24) keinen Unterschied zwischen einem lokalen Speicherzugriff und einem Zugriff auf einen entfernten Speicher in einem der Computer (10, 20) des Computerclusters sehen.

3. System nach einem oder mehreren der vorangehenden Ansprüche, wobei der globale Adressraum eine Partition in einem verteilten gemeinsamen Speicher des Computerclusters ist.

4. System nach Anspruch 3, wobei die Partition eine gemeinsame Partition in dem verteilten gemeinsamen Speicher des Computerclusters ist.

5. System nach einem oder mehreren der vorangegangenen Ansprüche, wobei der Speicherdirektzugriff auf dem globalen Adressraum (32) ein Übersetzen einer Quelladresse (216) im Spezialspeicher (13) des ersten Beschleunigers (14) in eine globale Adresse (232) auf dem globalen Adressraum (32) umfasst, wobei mittels der globale Adresse (232) im globalen Adressraum (32) der zweite Beschleuniger (24) ermittelt wird.

6. System nach Anspruch 5, wobei der zweite Beschleuniger (24) mittels einer Maske (230) im globalen Adressraum (32) ermittelt wird.

7. System nach Anspruch 5, wobei der zweite Beschleuniger (24) mittels Intervalle im globalen Adressraum (32) ermittelt wird.

8. Verfahren zur direkten Kommunikation zwischen Hardwarebeschleunigern (14, 24) in einem Computercluster, umfassend:
Bereitstellen eines ersten Hardwarebeschleunigers (14) in einem ersten Computer (10) eines Computercluster; und
Bereitstellen eines zweiten Hardwarebeschleunigers (24) in einem zweiten Computer (20) des Computercluster;
wobei der erste (10) und der zweite (20) Computer verschieden voneinander sind und ausgebildet sind, entfernt über ein Netzwerk (30) kommunizieren zu können,
**dadurch gekennzeichnet, dass** der erste Hardwarebeschleuniger (14) ausgebildet ist, Daten von dem zweiten Hardwarebeschleuniger (24) anzufragen und Daten mittels eines Speicherdirektzugriffs auf einem globalen Adressraum (32) von dem zweiten Computer (20) abzurufen und/oder zu dem zweiten Computer (20) zu übermitteln, so dass der erste und zweite Hardwarebeschleuniger (14, 24) direkt miteinander kommunizieren, wobei für die direkte Kommunikation zwischen den Hardwarebeschleunigern (14, 24) keine Unterstützung von Rechen- und/oder Speichereinheiten notwendig ist, wobei die direkte Kommunikation zwischen den Hardwarebeschleunigern (14, 24) direkt über das Netzwerk (30) und entsprechende Netzwerkschnittstellen (16, 26) auf den Computern (10, 20) in dem Cluster und ohne Unterstützung von CPUs (12, 22) und/oder Arbeitsspeicher (11, 21) des ersten (10) und zweiten (20) Computers erfolgt.

## Claims

1. A system for direct communication between hardware accelerators (14, 24) in a computer cluster, comprising:
- a first hardware accelerator (14) in a first computer (10) of a computer cluster; and
- a second hardware accelerator (24) in a second computer (20) of the computer cluster;
- wherein the first (10) and the second (20) computer are different from each other and are designed to be able to communicate remotely via a network (30),
- **characterized in that** the first hardware accelerator (14) is designed to request data from the second hardware accelerator (24) and retrieve data from the second computer (20) by means of a direct memory access to a global address space (32), and/or to transmit data to the second computer (20) such that the first and second hardware accelerators (14, 24) communicate directly with each other, wherein the direct communication between the hardware accelerators (14, 24) occurs directly via the network (30) and corresponding network interfaces (16, 26) on the computers (10, 20) in the cluster and without support from CPUs (12, 22) and/or RAM (11, 21) of the first (10) and second (20) computer.

2. The system according to one or more of the preceding claims, wherein the global address space is transparent so that the accelerator (14, 24) cannot discern any difference between a local memory access and an access to a remote memory in one of the computers (10, 20) of the computer cluster.

3. The system according to one or more of the preceding claims, wherein the global address space is a partition in a distributed common memory of the computer cluster.

4. The system according to claim 3, wherein the partition is a common partition in the distributed common memory of the computer cluster.

5. The system according to one or more of the preceding claims, wherein the direct memory access to the global address space (32) comprises translating a source address (216) in the special memory (13) of the first accelerator (14) into a global address in the global address space (32), wherein the second accelerator (24) is ascertained by means of the global address (232) in the global address space (32).

6. The system according to claim 5, wherein the second accelerator (24) is ascertained by means of a mask (230) in the global address space (32).

7. The system according to claim 5, wherein the second accelerator (24) is ascertained by means of intervals in the global address space (32).

8. A method for direct communication between hardware accelerators (14, 24) in a computer cluster, comprising:
- providing a first hardware accelerator (14) in a first computer (10) of a computer cluster; and
- providing a second hardware accelerator (24) in a second computer (20) of the computer cluster;
- wherein the first (10) and the second (20) computer are different from each other and are designed to be able to communicate remotely via a network (30),
- **characterized in that** the first hardware accelerator (14) is designed to request data from the second hardware accelerator (24) and retrieve data from the second computer (20) by means of a direct memory access to a global address space (32), and/or to transmit data to the second computer (20) such that the first and second hardware accelerators (14, 24) communicate directly with each other, wherein no support from computing and/or memory units is necessary for the direct communication between the hardware accelerators (14, 24), wherein the direct communication between the hardware accelerators (14, 24) occurs directly via the network (30) and corresponding network interfaces (16, 26) on the computers (10, 20) in the cluster and without support from CPUs (12, 22) and/or RAM (11, 21) of the first (10) and second (20) computer.

## Revendications

1. Système de communication directe entre des accélérateurs matériels (14, 24) dans une grappe d'ordinateurs, comprenant :
un premier accélérateur matériel (14) dans un premier ordinateur (10) d'une grappe d'ordinateurs ; et
un second accélérateur matériel (24) dans un second ordinateur (20) de la grappe d'ordinateurs ;
dans lequel le premier ordinateur (10) et le second ordinateur (20) sont différents l'un de l'autre et conçus de manière à pouvoir communiquer à distance via un réseau (30),
**caractérisé en ce que** le premier accélérateur matériel (14) est conçu de manière à solliciter les données du second accélérateur matériel (24) et à consulter les données dans un espace d'adressage global (32) du second ordinateur (20) au moyen d'un accès direct à une mémoire et/ou à les transmettre au second ordinateur (20), de sorte que les premier et second accélérateurs matériels (14, 24) communiquent directement l'un avec l'autre, dans lequel la communication directe entre les accélérateurs matériels (14, 24) se déroule directement sur les ordinateurs (10, 20) dans la grappe via le réseau (30) et les interfaces de réseau appropriées (16, 26) et sans l'assistance d'unités centrales de traitement (12, 22) et/ou de la mémoire de travail (11, 21) respective des premier (10) et second (20) ordinateurs.

2. Système selon l'une ou plusieurs des revendications précédentes, dans lequel l'espace d'adressage global est transparent, de sorte que les accélérateurs (14, 24) ne font aucune différence entre un accès à une mémoire locale et à un accès à une mémoire à distance dans l'un des ordinateurs (10, 20) de la grappe d'ordinateurs.

3. Système selon l'une ou plusieurs des revendications précédentes, dans lequel l'espace d'adressage global est une partition dans une mémoire commune partagée de la grappe d'ordinateurs.

4. Système selon la revendication 3, dans lequel la partition est une partition commune dans la mémoire commune partagée de la grappe d'ordinateurs.

5. Système selon l'une ou plusieurs des revendications précédentes, dans lequel l'accès direct à une mémoire dans l'espace d'adressage global (32) comprend une traduction d'une adresse source (216) au sein de la mémoire spéciale (13) du premier accélérateur (14) dans une adresse globale (232) à l'intérieur de l'espace d'adressage global (32), dans lequel le second accélérateur (24) est localisé dans l'espace d'adressage global (32) au moyen de l'adresse globale (232).

6. Système selon la revendication 5, dans lequel le second accélérateur (24) est localisé dans l'espace d'adressage global (32) au moyen d'un masque (230).

7. Système selon la revendication 5, dans lequel le second accélérateur (24) est localisé dans l'espace d'adressage global (32) au moyen d'intervalles.

8. Système de communication directe entre des accélérateurs matériels (14, 24) dans une grappe d'ordinateurs, comprenant :
la mise en place d'un premier accélérateur matériel (14) dans un premier ordinateur (10) d'une grappe d'ordinateurs ; et
la mise en place d'un second accélérateur matériel (24) dans un second ordinateur (20) de la grappe d'ordinateurs ;
dans lequel le premier ordinateur (10) et le second ordinateur (20) sont différents l'un de l'autre et conçus de manière à pouvoir communiquer à distance via un réseau (30),
**caractérisé en ce que** le premier accélérateur matériel (14) est conçu de manière à solliciter les données du second accélérateur matériel (24) et à consulter les données dans un espace d'adressage global (32) du second ordinateur (20) au moyen d'un accès direct à une mémoire et/ou à les transmettre au second ordinateur (20), de sorte que les premier et second accélérateurs matériels (14, 24) communiquent directement l'un avec l'autre, dans lequel aucune assistance d'unités de calcul et/ou de mémorisation n'est nécessaire à la communication directe entre les accélérateurs matériels (14, 24), dans lequel la communication directe entre les accélérateurs matériels (14, 24) se déroule directement sur les ordinateurs (10, 20) dans la grappe via le réseau (30) et les interfaces de réseau appropriées (16, 26) et sans l'assistance d'unités centrales de traitement (12, 22) et/ou de la mémoire de travail (11, 21) respective des premier (10) et second (20) ordinateurs.
